(19)

Europäisches
Patentamt
European
Patent Office
Office européen
des brevets

(11)  **EP 2 189 838 A1**

(12)  **EUROPEAN PATENT APPLICATION**
published in accordance with Art. 153(4) EPC

(43) Date of publication:
**26.05.2010 Bulletin 2010/21**

(21) Application number: **08831554.4**

(22) Date of filing: **22.09.2008**

(51) Int Cl.:
*G02F 1/1335* (2006.01)     *G02F 1/13357* (2006.01)

(86) International application number:
**PCT/JP2008/067599**

(87) International publication number:
**WO 2009/038240 (26.03.2009 Gazette 2009/13)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority:  **21.09.2007   JP 2007246295**

(71) Applicant: **Sony Corporation**
**Tokyo 108-0075 (JP)**

(72) Inventors:
• **OHTA, Eiji**
**Tokyo 108-0075 (JP)**
• **HOSOYA, Ken**
**Tokyo 108-0075 (JP)**
• **KUDO, Yasuyuki**
**Tokyo 108-0075 (JP)**
• **YAMAKITA, Shigehiro**
**Tokyo 108-0075 (JP)**

• **KAKINUMA, Masayasu**
**Tokyo 108-0075 (JP)**
• **ISHIMORI, Taku**
**Tokyo 108-0075 (JP)**
• **SHINKAI, Shogo**
**Tokyo 108-0075 (JP)**
• **HAYASHI, Hiroshi**
**Tokyo 108-0075 (JP)**
• **MAEKAWA, Yoshiyuki**
**Tokyo 108-0075 (JP)**
• **MIYAKE, Masami**
**Tokyo 108-0075 (JP)**
• **KANNO, Yohei**
**Tokyo 108-0075 (JP)**
• **SASAKI, Fumiko**
**Tokyo 108-0075 (JP)**

(74) Representative: **Müller - Hoffmann & Partner**
**Patentanwälte**
**Innere Wiener Strasse 17**
**81667 München (DE)**

(54)  **OPTICAL ELEMENT WRAPPER, OPTICAL ELEMENT STACK, ITS MANUFACTURING METHOD, BACKLIGHT, AND LIQUID CRYSTAL DISPLAY**

(57)   An optical element covering member has: one, two, or more film-shaped or sheet-shaped optical elements; a plate-shaped supporting medium for supporting the one, two, or more optical elements; and a contractible covering member for covering the one, two, or more optical elements and the supporting medium. The one, two, or more optical elements and the supporting medium construct a stacked member, the stacked member has an incident surface into which light from a light source enters, a transmission surface for transmitting the light which has entered from the incident surface, and edge surfaces locating between the incident surface and the transmission surface. The covering member is closely adhered to the stacked member and covers the transmission surface, the incident surface, and all edge surfaces of the stacked member. A thickness t of the supporting medium, a length L of a side of the supporting medium, and a tensile force F of the covering member satisfy a relational expression $0 \leq F \leq 1.65 \times 10^4 \times t/L$ under an environment of a temperature of 70°C (where, t: distance between an incident surface and a transmission surface of the supporting medium, L: length of a side closed by the covering member among the sides constructing a surface perpendicular to the thickness t, and F: tensile force of the covering member which acts in the direction parallel with the side of the length L).

EP 2 189 838 A1

# Fig. 2

**Description**

Technical Field

The invention relates to an optical element covering member, an optical element stacked member, its producing method, and a backlight and a liquid crystal display apparatus each including the optical element covering member. More particularly, the invention relates to an optical element covering member and an optical element stacked member for improving display properties of the liquid crystal display apparatus.

Background Art

Hitherto, a number of optical elements are used in a liquid crystal display apparatus in order to improve a viewing angle, luminance, and the like. As those optical elements, film-shaped or sheet-shaped optical elements such as diffuser films, prism sheets, or the like are used.

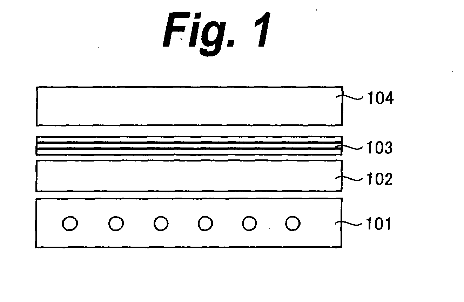

Fig. 1 shows a construction of the liquid crystal display apparatus in the related art. As shown in Fig. 1, the liquid crystal display apparatus has: a lighting device 101 for transmitting light; a diffuser plate 102 for diffusing the light emitted from the lighting device 101; a plurality of optical elements 103 for executing convergence, diffusion, or the like of the light diffused by the diffuser plate 102; and a liquid crystal panel 104.

In association with the realization of a large size of the recent image display apparatus, there is such a tendency that a tare weight and a size of the optical element increase. When the tare weight and size of the optical element increase as mentioned above, since a rigidity of the optical element lacks, a deformation of the optical element occurs. Such a deformation of the optical element exerts an influence on optical directivity to the display surface and causes a serious problem such as a luminance variation.

Therefore, such a technique that a lack of rigidity of the optical element is improved by increasing a thickness of optical element has been proposed. However, the liquid crystal display apparatus becomes thick and such an advantage of the liquid crystal display apparatus that a thin shape and a light weight are obtained is deteriorated. Therefore, such a technique that by adhering the optical elements with a transparent pressure sensitive adhesive, the lack of rigidity of the sheet-shaped or film-shaped optical element is improved has been proposed (for example, refer to the Official Gazette of JP-A-2005-301147).

Disclosure of Invention

Problem to be solved by the Invention

However, according to the technique of Patent Document 1, there is such a problem that since the optical elements are adhered with the transparent pressure sensitive adhesive, the liquid crystal display apparatus itself also becomes thick although a degree of problem is smaller than that of the improving method whereby the thickness of optical element is increased. On the other hand, there is also a risk that display properties of the liquid crystal display apparatus is deteriorated by the transparent pressure sensitive adhesive.

It is, therefore, an object of the invention to provide an optical element covering member, an optical element stacked member, and its producing method in which a lack of rigidity of the optical element is improved while suppressing an increase in thickness of a liquid crystal display apparatus and, further, display properties of the liquid crystal display apparatus are not deteriorated, and to provide a backlight and the liquid crystal display apparatus each including the optical element covering member.

Means for Solving the Problem

The inventors et al. have vigorously examined in order to improve the lack of rigidity of the optical element while suppressing an increase in thickness of the liquid crystal display apparatus or suppressing a deterioration in display properties of the liquid crystal display apparatus, so that they have invented an optical element covering member which covers the optical element and a supporting medium by a covering member.

However, according to knowledge of the inventors et al., when the contractible covering member is used as an optical element covering member as mentioned above, since the contraction properties of the covering members are not uniform, if a contraction stress remains excessively, a stress to the supporting medium becomes too high and a warp or a twist is caused.

For example, the covering member becomes a convex shape to the liquid crystal panel side of the liquid crystal display apparatus and is come into contact therewith and when it is pressurized, light shielding performance of the liquid crystal is deteriorated and defective picture quality such as a light leakage or the like is caused. On the other hand, if a warp occurs in a convex shape on the backlight side, a distortion of the supporting medium is caused, a swell to an optical film is caused, a luminance variation is deteriorated, a warp to the liquid crystal panel side of an edge portion is caused, a light leakage is caused, and defective picture quality is caused. Or, if the warp to the backlight side is strong, such a problem that an inconvenience in which a clearance is eliminated and a squeal is generated occurs is caused.

Therefore, the inventors et al. have vigorously examined in order to reduce the deterioration of the picture quality in the optical element covering member. Thus, they have found out that the warp and squeal can be suppressed by controlling a tensile force of the contractible covering member to a member to be covered.

The invention has been derived on the basis of the above examination.

To solve the foregoing problems, according to the first invention, there is provided an optical element covering member comprising:

one, two, or more film-shaped or sheet-shaped optical elements;
a plate-shaped supporting medium for supporting the one, two, or more optical elements; and
a contractible covering member for covering the one, two, or more optical elements and the supporting medium,
**characterized in that** the one, two, or more optical elements and the supporting medium construct a stacked member,
the stacked member has an incident surface into which light from a light source enters, a transmission surface for transmitting the light which has entered from the incident surface, and edge surfaces locating between the incident surface and the transmission surface,
the covering member is closely adhered to the stacked member and covers the transmission surface, the incident surface, and all of the edge surfaces of the stacked member, and
a thickness t of the supporting medium, a length L of a side of the supporting medium, and a tensile force F of the covering member satisfy the following relational expression (1) under an environment of a temperature of 70°C:

$$0 \leq F \leq 1.65 \times 10^4 \times t/L \quad \cdot \cdot \cdot (1)$$

(where, in the expression (1), t, L, and F indicate as follows,
t: distance between an incident surface and a transmission surface of the supporting medium,
L: length of a side closed by the covering member among the sides constructing a surface perpendicular to the thickness t, and
F: tensile force of the covering member which acts in a direction parallel with the side of the length L).

According to the second invention, there is provided an optical element covering member comprising:

a plate-shaped supporting medium; and
a contractible covering member for covering the supporting medium,
**characterized in that** the supporting medium has an incident surface into which light from a light source enters, a transmission surface for transmitting the light which has entered from the incident surface, and edge surfaces locating between the incident surface and the transmission surface,
the covering member is closely adhered to the supporting medium and covers the transmission surface, the incident surface, and all of the edge surfaces of the supporting medium, and
a thickness t of the supporting medium, a length L of a side of the supporting medium, and a tensile force F of the covering member satisfy the following relational expression (1) under an environment of a temperature of 70°C:

$$0 \leq F \leq 1.65 \times 10^4 \times t/L \quad \cdot \cdot \cdot (1)$$

(where, in the expression (1), t, L, and F indicate as follows,
t: distance between an incident surface and a transmission surface of the supporting medium,
L: length of a side closed by the covering member among the sides constructing a surface perpendicular to the thickness t, and
F: tensile force of the covering member which acts in a direction parallel with the side of the length L).

According to the third invention, there is provided an optical element covering member comprising:

a plate-shaped supporting medium; and

a contractible covering member for covering the supporting medium,

**characterized in that** the supporting medium has a first principal surface, a second principal surface, and edge surfaces locating between the first principal surface and the second principal surface,

the covering member is closely adhered to the supporting medium and covers the first principal surface, the second principal surface, and all of the edge surfaces of the supporting medium, and

a thickness t of the supporting medium, a length L of a side of the supporting medium, and a tensile force F of the covering member satisfy the following relational expression (1) under an environment of a temperature of 70°C:

$$0 \leq F \leq 1.65 \times 10^4 \times t/L \quad \ldots (1)$$

(where, in the expression (1), t, L, and F indicate as follows,

t: distance between the first principal surface and the second principal surface of the supporting medium,

L: length of a side closed by the covering member among the sides constructing a surface perpendicular to the thickness t, and

F: tensile force of the covering member which acts in a direction parallel with the side of the length L).

According to the fourth invention, there is provided an optical element stacked member comprising:

a plate-shaped supporting medium having a first principal surface and a second principal surface; and

a contractible or extensible optical element which is stacked onto at least one of the first principal surface and the second principal surface of the supporting medium and has a film-shape or a sheet-shape,

wherein an outer edge of the stacked optical element is bonded to at least two facing sides of the supporting medium and the optical element and the supporting medium are closely adhered to each other, and

a thickness t of the supporting medium, a length L of the side of the supporting medium, and a tensile force F of the optical element satisfy the following relational expression (1) under an environment of a temperature of 70°C:

$$0 \leq F \leq 1.65 \times 10^4 \times t/L \quad \ldots (1)$$

(where, in the expression (1), t, L, and F indicate as follows,

t: distance between the first principal surface and the second principal surface of the supporting medium,

L: length of the two facing sides to which the optical element has been bonded among the sides constructing a surface perpendicular to the thickness t, and

F: tensile force of the optical element which acts in a direction parallel with the side of the length L).

According to the fifth invention, there is provided a producing method of an optical element stacked member, comprising the steps of:

bonding an outer edge of the optical element to at least two facing sides of a supporting medium; and

heat-processing the optical element bonded to the supporting medium, thereby contracting the optical element and closely adhering the supporting medium and the optical element,

wherein a thickness t of the supporting medium, a length L of the side of the supporting medium, and a tensile force F of the optical element satisfy the following relational expression (1) under an environment of a temperature of 70°C:

$$0 \leq F \leq 1.65 \times 10^4 \times t/L \quad \ldots (1)$$

(where, in the expression (1), t, L, and F indicate as follows,

t: distance between the first principal surface and the second principal surface of the supporting medium,

L: length of the two facing sides to which the optical element has been bonded among the sides constructing a surface perpendicular to the thickness t, and

F: tensile force of the optical element which acts in a direction parallel with the side of the length L).

According to the sixth invention, there is provided an optical element covering member comprising:

a plate-shaped optical element stacked member having a first principal surface, a second principal surface, and edge surfaces locating between the first principal surface and the second principal surface;

a contractible or extensible covering member for covering the optical element stacked member; and

a bonding member for bonding edge portions of the covering member which covers the first principal surface and edge portions of the covering member which covers the second principal surface,

wherein the optical element stacked member has

a plate-shaped supporting medium and

an optical element which is stacked onto the plate-shaped supporting medium and has a film-shape or a sheet-shape,

the bonding member is arranged at an outer edge of the optical element stacked member,

the covering member whose edge portions have been bonded by the bonding member covers the first principal surface, the second principal surface, and one set of facing edge surfaces of the optical element stacked member and is closely adhered to the optical element stacked member, and

a thickness t of the supporting medium, a length L of the side of the supporting medium, and a tensile force F of the covering member satisfy the following relational expression (1) under an environment of a temperature of 70°C:

$$0 \leq F \leq 1.65 \times 10^4 \times t/L \quad \ldots \quad (1)$$

(where, in the expression (1), t, L, and F indicate as follows,

t: distance between an incident surface and a transmission surface of the supporting medium,

L: length of the sides closed by the covering member and/or the bonding member among the sides constructing a surface perpendicular to the thickness t, and

F: tensile force of the covering member which acts in a direction parallel with the side of the length L).

According to the seventh invention, there is provided an optical element covering member comprising:

a plate-shaped supporting medium having a first principal surface, a second principal surface, and edge surfaces locating between the first principal surface and the second principal surface;

a contractible or extensible covering member for covering the supporting medium; and

a bonding member for bonding edge portions of the covering member which covers the first principal surface and edge portions of the covering member which covers the second principal surface,

wherein the bonding member is arranged at an outer edge of an optical element stacked member,

the covering member whose edge portions have been bonded by the bonding member covers the first principal surface, the second principal surface, and one set of facing edge surfaces of the supporting medium and is closely adhered to the supporting medium, and

a thickness t of the supporting medium, a length L of the side of the supporting medium, and a tensile force F of the covering member satisfy the following relational expression (1) under an environment of a temperature of 70°C:

$$0 \leq F \leq 1.65 \times 10^4 \times t/L \quad \ldots \quad (1)$$

(where, in the expression (1), t, L, and F indicate as follows,

t: distance between an incident surface and a transmission surface of the supporting medium,

L: length of the sides closed by the covering member and/or the bonding member among the sides constructing a surface perpendicular to the thickness t, and

F: tensile force of the covering member which acts in a direction parallel with the side of the length L).

In the invention, a member obtained by covering only the supporting medium with the covering member is also called an optical element covering member.

In the first and sixth inventions, since the one, two, or more optical elements and the supporting medium are covered with the covering member, the one, two, or more optical elements and the supporting medium can be integrated. Therefore, the lack of rigidity of the optical element can be supplemented by the supporting medium.

In the first to third, sixth, and seventh inventions, by controlling the tensile force of the contractible covering member for each side of the supporting medium which is covered, the occurrence of the warp is suppressed while suppressing a slack, variation, and wrinkles and the deterioration in picture quality such as a light leakage and a squeal due to the warp can be suppressed.

In the fourth and fifth inventions, the outer edge of the film-shaped or sheet-shaped optical element is bonded to the two facing sides of the plate-shaped supporting medium and the tensile force which acts on the optical element is controlled. Thus, the occurrence of the warp of the optical element stacked member can be suppressed while suppressing the occurrence of the slack, variation, and wrinkles of the optical element. By suppressing the occurrence of the warp, the deterioration in picture quality such as a light leakage and the squeal due to the warp of the optical element stacked member can be suppressed.

Advantages of the Invention

As described above, according to the invention, the lack of rigidity of the optical element can be improved while suppressing the increase in thickness of the liquid crystal display apparatus or the deterioration in the display properties of the liquid crystal display apparatus. The deterioration in picture quality such as a light leakage or the like is suppressed while suppressing the occurrence of the warp without causing the slack, variation, and wrinkles due to the covering member, and an inconvenience such as squeal or the like can be suppressed.

Brief Description of Drawings

Fig. 1 is a schematic diagram showing a construction of a liquid crystal display apparatus in the related art.
Fig. 2 is a schematic diagram showing a constructional example of a liquid crystal display apparatus according to the first embodiment of the invention.
Fig. 3 is a schematic plan view showing a relation between sides of a supporting medium and a tensile force F of a covering member which acts in the direction perpendicular to the side.
Fig. 4A is a schematic plan view showing a direction of an aligning axis of the covering member in a first region and Fig. 4B is a schematic plan view showing a direction of an aligning axis of the covering member in a second region.
Fig. 5 is a schematic cross sectional view showing a constructional example of an optical element covering member according to the first embodiment of the invention.
Fig. 6 is a schematic cross sectional view showing the first example of a bonding portion of the covering member.
Fig. 7 is a schematic cross sectional view showing the second example of a bonding portion of the covering member.
Fig. 8A is a plan view showing a constructional example of an optical element covering member according to the second embodiment of the invention and Fig. 8B is a perspective view showing a constructional example of the optical element covering member according to the second embodiment of the invention.
Fig. 9 is a perspective view showing a constructional example of a backlight according to the third embodiment of the invention.
Fig. 10 is a perspective view showing a constructional example of a backlight according to the fourth embodiment of the invention.
Fig. 11 is a perspective view showing the first constructional example of an optical element covering member according to the fifth embodiment of the invention.
Fig. 12 is a perspective view showing the second constructional example of the optical element covering member according to the fifth embodiment of the invention.
Fig. 13 is a perspective view showing the third constructional example of the optical element covering member according to the fifth embodiment of the invention.
Figs. 14A to 14C are schematic cross sectional views showing the first to third examples of the bonding of the covering member.
Figs. 15A to 15C are schematic cross sectional views showing the fourth to sixth examples of the bonding of the covering member.
Figs. 16A and 16B are step diagrams for explaining a producing method of the optical element covering member according to the fifth embodiment of the invention.
Fig. 17 is a perspective view showing an example of a construction of an optical element covering member according to the sixth embodiment of the invention.
Figs. 18A to 18D are schematic cross sectional views showing the first to fourth examples of the bonding of the covering member.
Figs. 19A to 19D are schematic cross sectional views showing the fifth to eighth examples of the bonding of the covering member.
Fig. 20 is a perspective view showing a constructional example of a liquid crystal display apparatus according to the seventh embodiment of the invention.
Fig. 21 is a schematic plan view showing a relation between sides of a supporting medium and a tensile force F of the optical element which acts in the direction perpendicular to the side.
Fig. 22A is an exploded perspective view showing the first example of the optical element. Fig. 22B is a perspective view showing the first example of the optical element.

Fig. 23A is an exploded perspective view showing the second example of the optical element. Fig. 23B is an exploded perspective view showing the second example of the optical element.

Fig. 24A is an exploded perspective view showing the third example of the optical element and Fig. 24B is a perspective view showing the third example of the optical element.

Figs. 25A to 25D are step diagrams for explaining an example of a producing method of a liquid crystal display apparatus according to the seventh embodiment of the invention.

Fig. 26A is an exploded perspective view showing a constructional example of an optical element stacked member according to the eighth embodiment of the invention and Fig. 26B is a perspective view showing a constructional example of the optical element stacked member according to the eighth embodiment of the invention.

Fig. 27A is an exploded perspective view showing an example of bonding positions of the optical elements stacked respectively onto both of principal surfaces of a supporting medium and Fig. 27B is a perspective view showing an example of bonding positions of the optical elements stacked respectively onto both of principal surfaces of the supporting medium.

Figs. 28A to 28C are schematic cross sectional views showing the first to third examples of a bonding portion of the optical element stacked member.

Figs. 29A to 29C are schematic cross sectional views showing the fourth to sixth examples of the bonding portion of the optical element stacked member.

Fig. 30A is an exploded perspective view showing a constructional example of an optical element stacked member according to the ninth embodiment of the invention and Fig. 30B is a perspective view showing a constructional example of the optical element stacked member according to the ninth embodiment of the invention.

Figs. 31A and 31B are schematic cross sectional views showing the first and second examples of the bonding portion of the optical element stacked member.

Figs. 32A to 32C are schematic cross sectional views showing the third to fifth examples of the bonding portion of the optical element stacked member.

Figs. 33A to 33C are schematic cross sectional views showing the sixth to eighth examples of the bonding portion of the optical element stacked member.

Fig. 34 is a schematic cross sectional view showing a constructional example of an optical element stacked member according to the tenth embodiment of the invention.

Fig. 35 is a schematic cross sectional view showing a constructional example of an optical element stacked member according to the eleventh embodiment of the invention.

Fig. 36 is a schematic cross sectional view showing a constructional example of an optical element covering member according to the twelfth embodiment of the invention.

Fig. 37A is a perspective view showing a constructional example of the optical element covering member according to the twelfth embodiment of the invention and Fig. 37B is a schematic cross sectional view showing a constructional example of the optical element covering member according to the twelfth embodiment of the invention.

Fig. 38 is a schematic cross sectional view showing a constructional example of an optical element covering member according to the thirteenth embodiment of the invention.

Fig. 39A is a plan view showing a constructional example of an optical element covering member according to the fourteenth embodiment of the invention and Fig. 39B is a perspective view showing a constructional example of the optical element covering member according to the fourteenth embodiment of the invention.

Fig. 40 is a graph showing a relation between a tensile force and a ratio t/L of samples.

Best Mode for Carrying Out the Invention

Embodiments of the invention will be described in the following order with reference to the drawings. In all of the drawings of the following embodiments, the same or corresponding portions are designated by the same reference numerals.

(1) First embodiment (example of an optical element covering member including a supporting medium and an optical element)

(2) Second embodiment (example of an optical element covering member having an opening in a corner portion)

(3) Third embodiment (example in which a reflection-type polarizer is arranged outside)

(4) Fourth embodiment (example in which an optical function of a covering member is allocated)

(5) Fifth embodiment (example in which an optical element stacked member is covered with a belt-shaped covering member)

(6) Sixth embodiment (example in which a bonding member is arranged at an outer edge of the optical element stacked member)

(7) Seventh embodiment (example of an optical element stacked member in which an optical element is bonded onto one principal surface of a supporting medium)

(8) Eighth embodiment (example of an optical element stacked member in which optical elements are bonded onto both principal surfaces of the supporting medium)

(9) Ninth embodiment (example of an optical element stacked member in which a plurality of optical elements are bonded onto one principal surface of the supporting medium)

(10) Tenth embodiment (example in which the supporting medium and the optical element are also bonded to a portion other than the outer edge)

(11) Eleventh embodiment (example in which the supporting medium and the optical element are point-bonded)

(12) Twelfth embodiment (example of a backlight of a side light system)

(13) Thirteenth embodiment (example of the backlight of the side light system)

(14) Fourteenth embodiment (example of an optical element covering member having an opening in a side portion) (1) First embodiment

(1-1) Construction of liquid crystal display apparatus

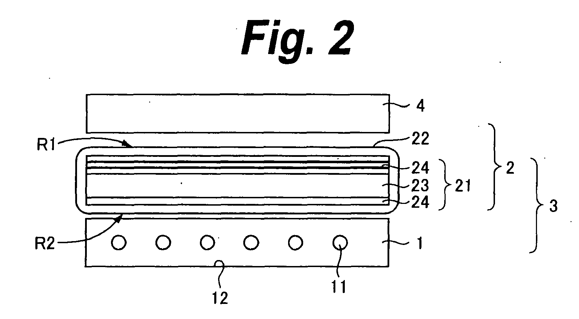

Fig. 2 shows a constructional example of a liquid crystal display apparatus according to the first embodiment of the invention. As shown in Fig. 2, the liquid crystal display apparatus has: a backlight 3 for transmitting light; and a liquid crystal panel 4 for displaying an image on the basis of the light emitted from the backlight 3. The backlight 3 has: a lighting device 1 for transmitting light; and an optical element covering member 2 for improving characteristics of the light emitted from the lighting device 1 and transmitting the light toward the liquid crystal panel 4. Hereinbelow, in various kinds of optical members such as an optical element covering member 2 and the like, a surface into which the light from the lighting device 1 enters is called an incident surface; a surface for transmitting the light which has entered from the incident surface is called a transmission surface; and a surface locating between the incident surface and the transmission surface is called an edge surface. The incident surface and the transmission surface are generally properly called a principal surface. Hereinbelow, the transmission surface is properly called a first principal surface and the incident surface is properly called a second principal surface.

[Lighting device]

The lighting device 1 is, for example, a direct under type lighting device and has: one, two, or more light sources 11 for transmitting the light; and a reflector 12 for reflecting the light emitted from the light source 11 and turning the light toward the direction of the liquid crystal panel 3. As a light source 11, for example, a CCFL (Cold Cathode Fluorescent Lamp), an HCFL (Hot Cathode Fluorescent Lamp), an OEL (Organic ElectroLuminescence), an IEL (Inorganic Electro-Luminescence), an LED (Light Emitting Diode), or the like can be used. The reflector 12 is disposed, for example, so as to cover lower and side portions of the one, two, or more light sources 11 and is used to reflect the light emitted from the one, two, or more light sources 11 toward the lower and side portions and the like and turns the light toward the direction of the liquid crystal panel 3.

[Optical element covering member]

The optical element covering member 2 has, for example: one, two, or more optical elements 24 for executing a process such as diffusion, convergence, or the like to the light emitted from the lighting device 1 and changing the characteristics of the light; a supporting medium 23 for supporting the one, two, or more optical elements; and a covering member 22 for covering the one, two, or more optical elements 24 and the supporting medium 23 and integrating them. The optical element 24 is provided for at least one of the incident surface side and the transmission surface side of the supporting medium 23. A member obtained by overlaying the supporting medium 23 and the one, two, or more optical elements 24 is called an optical element stacked member 21 hereinbelow.

The number and kind of optical elements 24 are not particularly limited but can be properly selected in accordance with characteristics of the desired liquid crystal display apparatus. As an optical element 24, for example, an element constructed by the supporting medium 23 and one, two, or more functional layers can be used. A construction formed only by the functional layers by omitting the supporting medium may be used. As an optical element 24, for example, a light diffuser element, a light condenser element, a reflection-type polarizer, a polarizer, a light dividing element, or the like can be used. As an optical element 24, for example, a film-shaped element, a sheet-shaped element, or a plate-shaped element can be used. A thickness of optical element 24 is equal to, preferably, 5 to 3000 $\mu$m, much preferably, 25 to 1000 $\mu$m. As for the thickness of each optical element 24, as compared with the case of stacking the optical elements 24, by covering them together with the supporting medium 23, its thickness can be reduced by about 20 to 50 % of that in the related art.

The supporting medium 23 is, for example, a transparent plate which transmits the light emitted from the lighting device 1 or an optical plate for executing diffusion, convergence, or the like to the light emitted from the lighting device 1 and changing the characteristics of the light. As an optical plate, for example, a diffuser plate, a phase contrast plate, a prism plate, or the like can be used. A thickness of supporting medium 23 is equal to, for example, 1000 to 50000 $\mu$m. The supporting medium 23 is made of, for example, a high polymer material and its transmittance is preferably equal to 30% or more. Stacking order of the optical element 24 and the supporting medium 23 is selected in accordance with, for example, the functions which the optical element 24 and the supporting medium 23 have. For example, when the supporting medium 23 is a diffuser plate, the supporting medium 23 is disposed on the side where the light from the lighting device 1 enters. When the supporting medium 23 is a reflection-type polarizing plate, the supporting medium 23 is disposed on the side where the light is transmitted to the liquid crystal panel 3. Shapes of the incident surface and the transmission surface of the optical element 24 and the supporting medium 23 are selected according to the shape of the liquid crystal panel 3 and are set to, for example, rectangular shapes having different aspect ratios. It is preferable that the supporting medium 23 has a proper rigidity. As a material of it, a material having elasticity of about 1.5 GPa or more at an ordinary temperature is proper. For example, polycarbonate, polymethyl methacrylate, polystyrene, cycloolefin resin (ZEONOR (registered trademark), etc.), glass, or the like can be mentioned.

It is preferable to execute an unevenness process to the principal surfaces of the optical element 24 and the supporting medium 23 and to allow fine particles to be contained therein. This is because the rubbing and friction can be reduced. By allowing the optical element 24 and the supporting medium 23 to contain an additive such as light stabilizer, ultraviolet light absorber, antistatic agent, flame retardant, or antioxidant as necessary, an ultraviolet absorbing function, an infrared absorbing function, an electrostatic suppressing function, or the like may be allocated to the optical element 24 and the supporting medium 23. On the other hand, by executing a surface treatment such as anti-reflection treatment (AR treatment), anti-glare treatment (AG treatment), or the like to the optical element 24 and the supporting medium 23, the diffusion of the reflection light or the reflection light itself can be also reduced. On the other hand, the surfaces of the optical element 24 and the supporting medium 23 may be allowed to have a function for reflecting ultraviolet rays and infrared rays.

The covering member 22 is, for example, a film or sheet of a single layer or a plurality of layers having transparency. The covering member 22 has, for example, a sack-like shape and all surfaces of the optical element stacked member 21 are closed by the covering member 22. The covering member 22 may have a construction in which edge portions of films which have been overlaid through the optical element stacked member 21 are bonded and two, three, or four sides of the covering member 22 are closed. Specifically speaking, for example, as a covering member 22 in which two sides are closed, a covering member in which edge portions in the longitudinal direction of the belt-shaped films or sheets are bonded or a covering member in which two rectangular films or sheets are overlaid and, thereafter, two facing sides are bonded can be mentioned. As a covering member 22 in which three sides are closed, a covering member in which the belt-shaped film or sheet is folded back so that edge portions in the longitudinal direction of the film or sheet are overlaid each other and, thereafter, two sides are bonded or a covering member in which two rectangular films or sheets are overlaid and, thereafter, three sides are bonded can be mentioned. As a covering member 22 in which four sides are closed, a covering member in which the belt-shaped films or sheets are folded back so that their edge portions in the longitudinal direction are overlaid and, thereafter, three sides are bonded or a covering member in which two rectangular films or sheets are overlaid and, thereafter, four sides are bonded can be mentioned. Among the surfaces of the covering member 22, hereinbelow, the surface serving as a side of the optical element stacked member 21 is called an inner surface and the surface on the side opposite thereto is called an outer surface. In the covering member 22, a region on the incident surface side into which the light from the lighting device 1 enters is called a second region R2 and a region on the transmission surface side for transmitting the light entered from the lighting device 1 toward the liquid crystal panel 3 is called a first region R1.

A thickness of covering member 22 is selected to, for example, 5 to 5000 $\mu$m, preferably, 10 to 500 $\mu$m, much preferably, 15 to 300 $\mu$m. When the covering member 22 is thick, a decrease in luminance, an uneven contraction of a thermally melt-bonded portion (sealed portion) of the covering member 22, or the like occurs. On the other hand, since a defective adhesion with the optical element stacked member 21 occurs and wrinkles or the like occurs. Therefore, when the covering member is attached to an actual apparatus, a distortion occurs, thereby causing a deterioration in image. It is also possible to construct in such a manner that the thickness of covering member 22 on the incident surface side and that on the transmission surface side are different. The covering member 22 may contain an aggregate from a viewpoint of rigidity.

When the covering member 22 has an anisotropy, it is preferable that the optical anisotropy is small. Specifically speaking, its retardation is equal to, preferably, 50 nm or less and, further preferably, 20 nm or less. It is preferable to use a uniaxial oriented or biaxial oriented sheet or film as a covering member 22. If such a sheet or film is used, since the covering member 22 can be contracted in the orienting direction by applying a heat, the adhesion between the covering member 22 and the optical element stacked member 21 can be raised.

It is preferable to allow the covering member 22 to have a contraction property. This is because a heat contraction property can be made to appear by applying the heat again to the thermally oriented covering member 22. It is also preferable that the covering member 22 has an extension property. Consequently, by extending the edge surfaces of the covering member 22, sandwiching the supporting medium 23 as an inner contained member and the optical elements 24, and thereafter, melt-bonding the edge portions by heat sealing, the covering and contraction can be performed by the extension property.

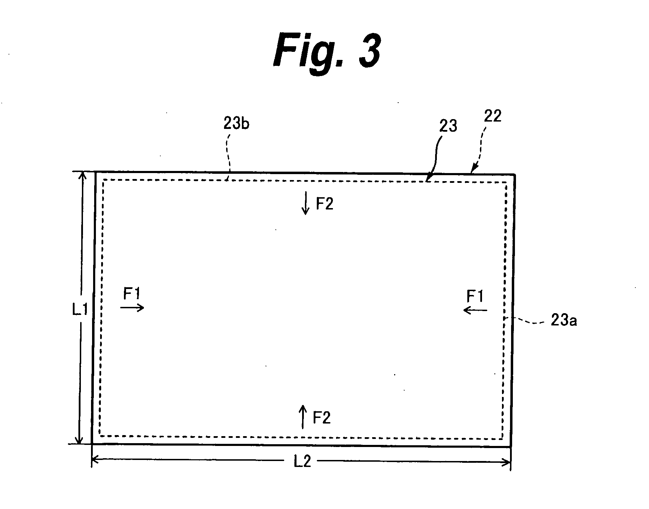

Fig. 3 is a schematic plan view showing a relation between each side of the supporting medium 23 and the tensile force F of the covering member 22 which acts in the direction perpendicular to each side. The supporting medium 23 has a rectangular principal surface. The rectangular principal surface is formed by: first sides 23a and 23a which face each other; and second sides 23b and 23b which face each other and perpendicularly cross the first sides. A thickness t of the supporting medium 23, lengths L1 and L2 of the first side 23a and the second side 23b of the supporting medium 23, and tensile forces F2 and F1 of the covering member which acts in parallel on the first side 23a and the second side 23b satisfy the following relational expressions (2) and (3) at a temperature of 70°C:

$$0 \leq F1 \leq 1.65 \times 10^4 \times t/L2 \quad . \quad . \quad . \quad (2)$$

$$0 \leq F2 \leq 1.65 \times 10^4 \times t/L1 \quad . \quad . \quad . \quad (3)$$

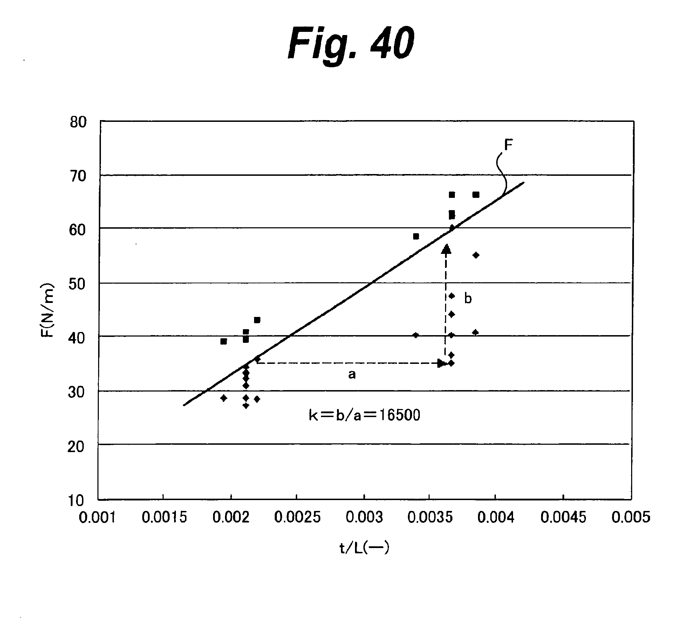

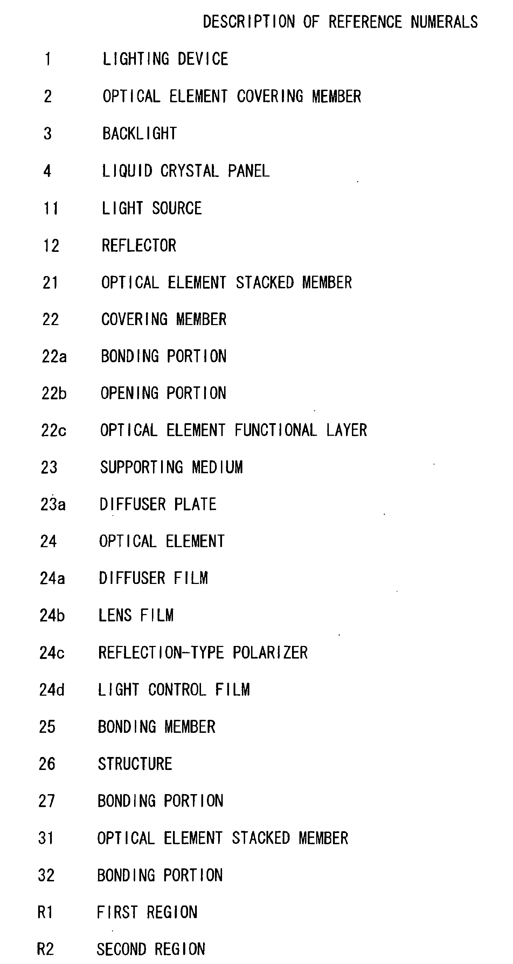

A relation of the tensile force in the direction which is parallel with the first side 23a to the thickness t of the supporting medium 23/the length L1 of the first side 23a and a relation of the tensile force in the direction which is parallel with the second side 23b to the thickness t of the supporting medium 23/the length L2 of the second side 23b will be described here with reference to Fig. 40. It will be understood from Fig. 40 that a region is divided into a region of a range of the large tensile force where the warp becomes defective and a region of a range of the tensile force without a warp in accordance with an inclination coefficient of the tensile force to the thickness t of the supporting medium/a length L of the first side or the second side. It will be understood from those relational expressions that the direction of the tensile force F1 or the tensile force F2 is inversely proportional to a length of the side which is parallel with the tensile force direction. The longer the long side is, the smaller the tensile force by which the warp is liable to occur is. The shorter the short side is, the more the tensile force by which the warp is liable to occur can be increased. From those relations, the tensile force by which no warp is caused can be found by the thickness t of the supporting medium 23 and the shape of the supporting medium 23 and the defective picture quality or the like due to the warp can be reduced.

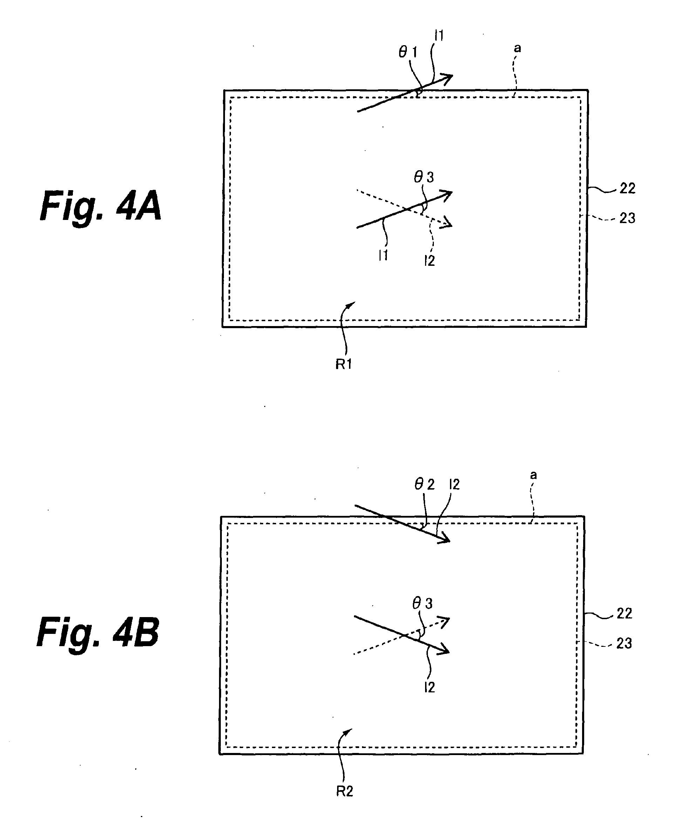

Fig. 4A shows a direction of an aligning axis of the high polymer material in the first region R1 of the covering member 22. Fig. 4B shows a direction of an aligning axis of the high polymer material in the second region R2 of the covering member 22. The covering member 22 has aligning axes 11 and 12 of the high polymer material in the first region R1 and the second region R2, respectively. There is an angle $\theta1$ between the aligning axis 11 of the first region R1 and a side surface a of the supporting medium 23. There is an angle $\theta2$ between the aligning axis 12 of the second region R2 and the side surface a of the supporting medium 23. The angles $\theta1$ and $\theta2$ are equal to, preferably, 8° or less, and much preferably, 3.5° or less. If the angles exceed the above numerical value range, since the contraction properties of the covering member 22 are not uniform, the covering member 22 cannot be fully contracted, a slack or wrinkles occur, and a luminance variation occurs as a surface light source, thereby causing a deterioration in picture quality of the liquid crystal display apparatus.

There is an angle $\theta3$ between the aligning axis 11 of the first region R1 of the covering member 22 and the aligning axis 12 of the second region R2 of the covering member 22. The angle $\theta3$ is equal to, preferably, 16° or less, and much preferably, 7° or less. If the angle exceeds the above numerical value range, since the contraction properties of the covering member 22 are not uniform, the covering member 22 cannot be fully contracted, a slack or wrinkles occur, and a luminance variation occurs as a surface light source, thereby causing a deterioration in picture quality of the liquid crystal display apparatus.

When the covering member 22 is made of a transparent resin material, as a measuring method of the aligning axis, for example, a method of grasping by a method of measuring an inclination at the time when a polarized wave has been applied to a test piece or the like cut out of the covering member 22 (retardation measurement) or a method of measuring it by a molecular orientation instrument or the like by a transmitted microwave can be used.

As a method of changing the angle between the long side of the film and the aligning axis, it can be realized by a method whereby the longitudinal direction of the film is rotated to an arbitrary angle, a test piece is cut out, the contained supporting medium and optical element are covered, and thereafter, the edge portions are thermally sealed and the film is thermally contracted. Or, since the aligning axes of an original roll itself of the contractible film in the center portion of the original roll and those in both edge portions are different, such an angle can be also changed by a collecting position of the contractible film. For example, in the case of the contractible film in the center portion, by making the aligning axis and the axis of the contractible film parallel with each other, a deviation can be decreased and they can be easily aligned. On the other hand, when the edge portions of the original roll of the contractible film are used, the deviation between the film longitudinal direction and the aligning axis increases. When the members contained is simply aligned in parallel with the film longitudinal direction, the deviation of the aligning axis increases. To avoid such problems, the direction of the members contained is made parallel with the aligning axis and the edge portions are thermally sealed and thermally contracted, thereby enabling the deviation to be decreased.

As a material of the covering member 22, preferably, a high polymer material having the thermal contraction property, much preferably, a high polymer material which is contracted by applying a heat from the ordinary temperature to 85°C can be used because the internal temperature of the liquid crystal display apparatus or the like reaches about 70°C at highest. Although the material is not particularly limited so long as it satisfies the relation as mentioned above, specifically speaking, the following materials can be used: polystyrene (PS); a copolymer of polystyrene and butadiene; polypropylene (PP); polyethylene (PE); casted polyethylene terephthalate (PET); polycarbonate (PC); a polyester resin such as polyethylene naphthalate (PEN) or the like; a vinyl bond system such as polyvinyl alcohol (PVA); a cycloolefin resin; an urethane resin; a vinyl chloride resin; a natural rubber resin; a material obtained by mixing an artificial rubber resin or the like individually or in combination; and the like.

It is preferable to select the heat contraction factor of the covering member 22 in consideration of the sizes and material quality of the contained supporting medium 23 and the optical element 24, a using environment of the optical element stacked member 21, and the like. Specifically speaking, the contraction factor at 85°C lies within a range, preferably, from 0.2 to 100 %, much preferably, from 0.5 to 20 %, and further preferably, from 0.5 to 10 %. If it is less than 0.2%, there is a risk that the adhesion between the covering member 22 and the optical element 24 deteriorates. If it exceeds 100%, there is a risk that the in-plane thermal contraction property becomes uneven and the optical element is contracted. It is preferable that thermal deformation temperature of the covering member 22 is equal to 85°C or higher. This is because a deterioration of optical properties of the optical element covering member 2 that is caused by the heat generated from the light source 11 can be suppressed. It is preferable that a dry decrease amount of the material of the covering member 22 is equal to 2% or less. A refractive index of the material of the covering member 22 (refractive index of the covering member 22) is equal to, preferably, 1.6 or less, much preferably, 1.55 or less. In the case where an optical functional layer is formed onto the covering member 22 by applying a shape or by transferring and applying a shape, the higher the refractive index is, the more an influence increases easily. The refractive index is equal to, preferably, 1.5 or more, much preferably, 1.57 or more, and most preferably, 1.6 or more. It is desirable to set the refractive index to a value within a preferred refractive index range in accordance with the functional layer. This is because the higher the refractive index is, the more the optical actions increase, for example, the condensing action, diffusing action, and the like can be improved.

It is preferable that the covering member 22 contains one, two, or more kinds of fillers. This is because when the optical element covering members are stacked, it is possible to prevent the optical element covering members from sticking each other and such a phenomenon that the adhesion between the covering member 22 and the members contained therein excessively rises and the covering member 2 and the members contained therein stick each other can be prevented. As a filler, for example, at least one kind of an organic filler and an inorganic filler can be used. As a material of the organic filler, for example, one, two, or more kinds of elements selected from a group consisting of an acrylic resin, a styrene resin, fluorine, and a hollow can be used. As an inorganic filler, for example, one, two, or more kinds of elements selected from a group consisting of silica, alumina, talc, titanium oxide, and barium sulfate can be used. As a shape of the filler, for example, various kinds of shapes such as needle-like shape, spherical shape, ellipsoidal shape, plate-like shape, and flake-like shape can be used. As a diameter of filler, for example, one, two, or more kinds of diameters are selected.

A shape may be formed on the surface instead of the filler. As a forming method of such a shape, for example, there can be mentioned: a method whereby when forming the contractible film or sheet for producing the covering member 22, an arbitrary shape with a diffusion property is transferred and applied onto the surface of the film or sheet; or a method whereby after the film or sheet was formed, an arbitrary shape with a diffusion property is transferred and applied by heating and/or pressurizing.

By allowing the covering member 22 to further contain an additive such as light stabilizer, ultraviolet light absorber, antistatic agent, flame retardant, or antioxidant as necessary, the ultraviolet absorbing function, the infrared absorbing function, the electrostatic suppressing function, or the like may be allocated to the covering member 22. On the other hand, by executing the anti-glare treatment (AG treatment), surface treatment such as anti-reflection treatment (AR treatment), or the like to the covering member 22, the diffusion of the reflection light or the reflection light itself may be reduced. Further, a function for transmitting the light in a specific wavelength region such as UV-A light (about 315 to 400 nm) may be allocated.

[Liquid crystal panel]

The liquid crystal panel 3 is provided to time-spatially modulate the light supplied from the light source 11 and display information. As a liquid crystal panel 3, for example, a panel of the following display mode can be used: a Twisted Nematic (TN) mode; a Super Twisted Nematic (STN) mode; a Vertically Aligned (VA) mode; an In-Plane Switching (IPS) mode; an Optically Compensated Birefringence (OCB) mode; a Ferroelectric Liquid Crystal (FLC) mode; a Polymer Dispersed Liquid Crystal (PDLC) mode; a Phase Change Guest Host (PCGH) mode; or the like.

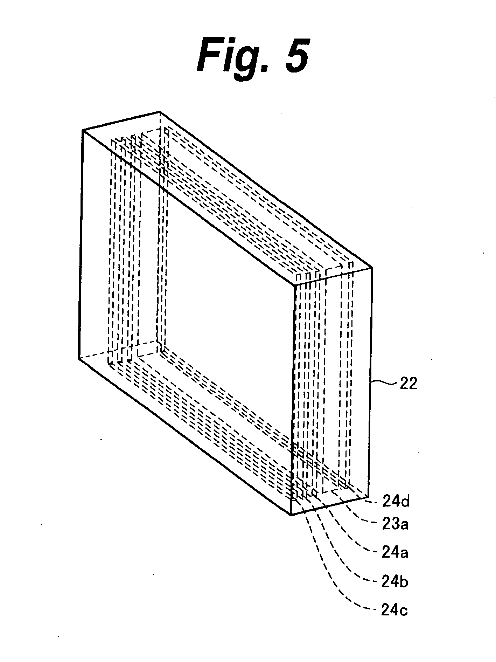

Subsequently, examples of the construction of the optical element covering member 2 will be described in detail with reference to Figs. 5 to 7.

Fig. 5 shows one constructional example of the optical element covering member according to the first embodiment of the invention. As shown in Fig. 5, the optical element covering member 2 has, for example: a diffuser plate 23a as a supporting medium; a diffuser film 24a, a lens film 24b, and a reflection-type polarizer 24c as optical elements; and the covering member 22 for integratedly covering them. In this instance, the diffuser plate 23a, diffuser film 24a, lens film 24b, and reflection-type polarizer 24c construct the optical element stacked member 21. The principal surface of the optical element stacked member 21 has, for example, rectangular shapes having different aspect ratios. The covering member 22 has, for example, a suck-like shape. All directions of the optical element stacked member 21 are closed by the covering member 22. The covering member 22 is bonded by the thermal melt-bonding or the like, for example, at the edge surface of the optical element stacked member 21.

The diffuser plate 23a is provided above the one, two, or more light sources 11 and is used to diffuse the light emitted from the one, two, or more light sources 11 and the light reflected by the reflector 12, thereby uniforming the luminance. As a diffuser plate 23a, for example, there can be used: a diffuser plate having on the surface an uneven structure for diffusing the light; a diffuser plate containing fine particles or the like having a refractive index different from that of the main component material of the diffuser plate 23a; a diffuser plate containing hollow fine particles; or a diffuser plate obtained by combining two or more kinds of uneven structure, fine particles, and hollow fine particles. As fine particles, for example, at least one kind of the organic filler and the inorganic filler can be used. The uneven structure, fine particles, and hollow fine particles are formed onto, for example, the transmission surface of the diffuser film 24a. A light transmittance of the diffuser plate 23a is equal to, for example, 30% or more.

The diffuser film 24a is formed onto the diffuser plate 23a and is used to further perform the diffusion or the like of the light diffused by the diffuser plate 23a. As a diffuser film 24a, for example, there can be used: a diffuser film having on the surface an uneven structure for diffusing the light; a diffuser film containing fine particles or the like having a refractive index different from that of the main component material of the diffuser film 24a; a diffuser film containing hollow fine particles; or a diffuser film obtained by combining two or more kinds of uneven structure, fine particles, and hollow fine particles. As fine particles, for example, at least one kind of the organic filler and the inorganic filler can be used. The uneven structure, fine particles, and hollow fine particles are formed onto, for example, the transmission surface of the diffuser film 24a.

The lens film 24b is provided on the diffuser film 24a and is used to improve directivity or the like of the irradiation light. A row of, for example, fine prisms or lenses is formed on the transmission surface of the lens film 24b. It is preferable that a cross section in the row direction of the prisms or lenses has, for example, an almost triangular shape and has rounded apexes. This is because cut-off properties can be improved and a wide viewing angle can be improved.

A light control film 24d has an optical functional layer having an uneven structure on at least one of the incident surface and the transmission surface and is provided to control a light source variation of the CCFL or LED. For example, a prism shape, an arcuate shape, a continuous hyperboloidal or paraboloidal shape, a single triangular shape of them, or a combination of them may be provided. A structure having a flat surface or a film such as a diffuser film 24 may be provided according to circumstances.

The diffuser film 24a and the lens film 24b are made of, for example, a high polymer material and have a refractive index of, for example, 1.5 to 1.6. As a material constructing the optical element 24 or the optical functional layer provided thereof, for example, a thermoplastic resin, an ionizing photosensitive resin which is hardened by the light or an electron beam, a thermosetting resin which is hardened by a heat, or an ultraviolet curing resin which is hardened by ultraviolet rays is preferable.

The reflection-type polarizer 24c is provided on the lens film 24b. In the light whose directivity has been improved by the lens film 24b, the polarizer 24c allows only one of the polarized components which cross perpendicularly to pass through it and reflects the other. The reflection-type polarizer 24c is a stacked member such as organic multilayer film, inorganic multilayer film, or liquid crystal multilayer film. The reflection-type polarizer 24c may contain a material having a refractive index different from that of the reflection-type polarizer 24c. A diffusion layer or a lens may be provided for the reflection-type polarizer 24c.

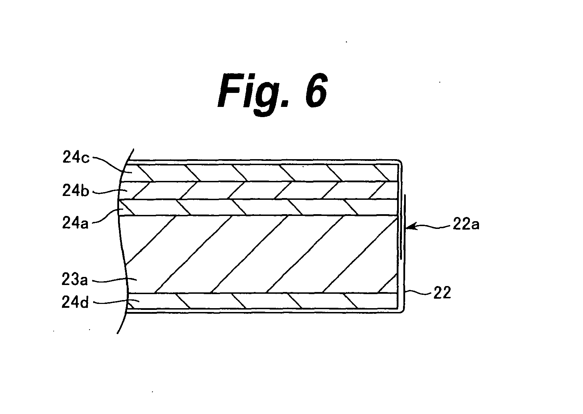

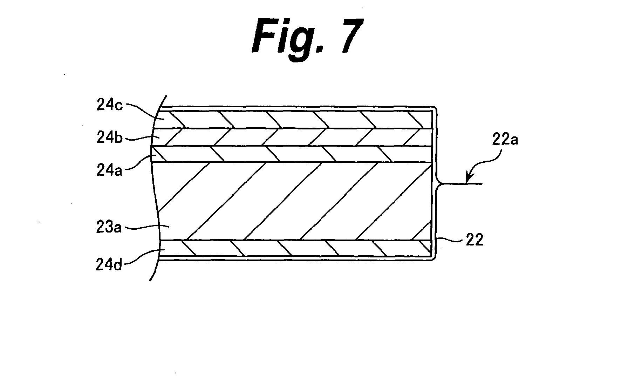

Examples of bonding portions of the covering member 22 will be described here with reference to Figs. 6 and 7.

[Bonding portions of covering member]

(First example)

Fig. 6 shows the first example of the bonding portion of the covering member. In the first example, as shown in Fig. 6, the inner surface and the outer surface of the edge portions of the covering member are bonded on the edge surface of the optical element stacked member 21 so as to be overlaid each other. That is, the edge portion of the covering member 22 is bonded so as to trace the edge surface of the optical element stacked member 21.

(Second example)

Fig. 7 shows the second example of the bonding portion of the covering member. In the second example, as shown in Fig. 7, the inner surfaces of the edge portion of the covering member are bonded on the edge surface of the optical element stacked member 21 so as to be overlaid each other. That is, the edge portion of the covering member 22 is bonded so as to protrude from the edge surface of the optical element stacked member 21.

(1-2) Producing method of optical element covering member

Subsequently, an example of a producing method of optical element covering member 2 having the foregoing construction will be described. First, the diffuser plate 23a, diffuser film 24a, lens film 24b, and reflection-type polarizer 24c are stacked onto the light control film 24d in this order, thereby obtaining the optical element stacked member 21. Subsequently, the original roll of the film having the heat contraction property is prepared and two sheets of rectangular film are cut out of the original roll. In this instance, it is preferable that there is an angle of 8° or less between the long side of the rectangular film and the aligning axis.

Subsequently, the two films are overlaid and two sides or three sides are thermally melt-bonded, thereby obtaining the sack-like covering member 22. It is also possible to construct in such a manner that the optical element stacked member 21 is sandwiched between the two films and at least two or more sides of the edge portions of the two films are thermally melt-bonded or the like, thereby obtaining the sack-like covering member 22. In this instance, it is preferable that an angle between the aligning axes of the two films is set to 16° or less. It is also possible to construct in such a manner that after the optical element stacked member 21 was formed onto one film or sandwiched between the two films, the open two sides, three sides, or four sides are thermally melt-bonded and the covering member 22 is sealed, thereby obtaining the optical element covering member 2. Subsequently, after the optical element stacked member 21 was inserted from the open side, the open side is thermally melt-bonded and the covering member 22 is sealed, thereby obtaining the optical element covering member 2. Subsequently, the optical element covering member 2 is conveyed into an oven or the like and the covering member 22 is contracted under a high-temperature environment.

The target optical element covering member is obtained in this manner.

In the first embodiment, by covering the optical element 24 and the supporting medium 23 with the covering member 22, the lack of rigidity of the optical element can be improved while suppressing an increase in thickness of optical element.

(2) Second embodiment

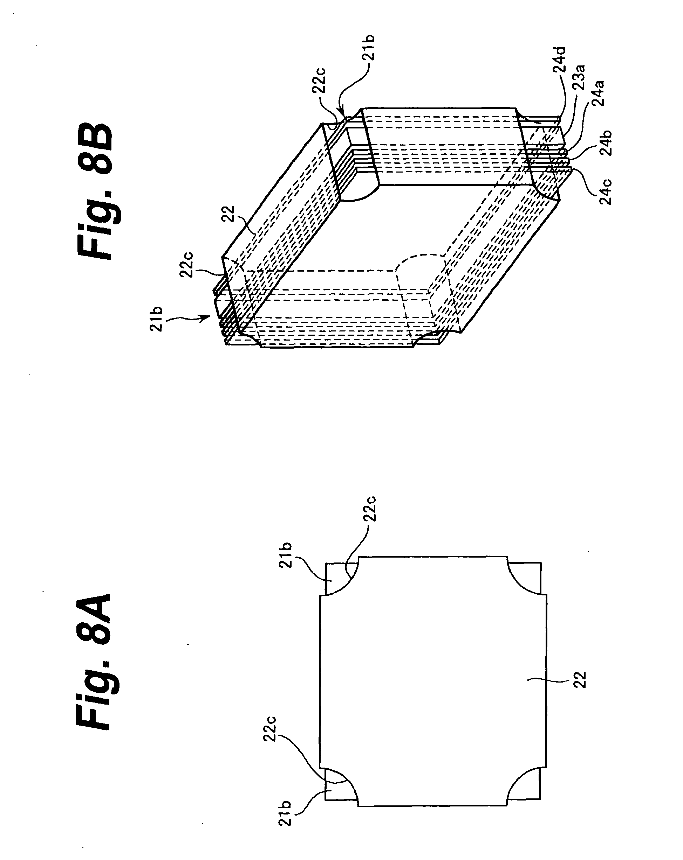

Fig. 8 shows a constructional example of an optical element covering member according to the second embodiment of the invention. In the second embodiment, one, two, or more openings 22c are formed in the covering member 22 in the first embodiment. The opening 22c is formed, for example, at a position corresponding to at least one of corner portions 21b of the optical element stacked member 21.

In the second embodiment, since the one, two, or more openings 22c are formed in the covering member 22, when the covering member 22 is contracted in the producing steps of the optical element covering member 2, the air in the covering member 22 can be exhausted from the opening 22c. Therefore, the occurrence of a swell or the like in the covering member 22 can be suppressed. This is because if the swell occurred, when the member is mounted in the actual apparatus, a distortion occurs, thereby causing a deterioration in image. A breakage of the covering member 22 can be also suppressed. The opening also becomes an exhaust port of the air at the time of the heat contraction. When the member is mounted in the liquid crystal display apparatus, the opening also becomes an exhaust port of the air expanded by the heat or an exhaust port of the air or the like which is generated from the optical element stacked member 21.

(3) Third embodiment

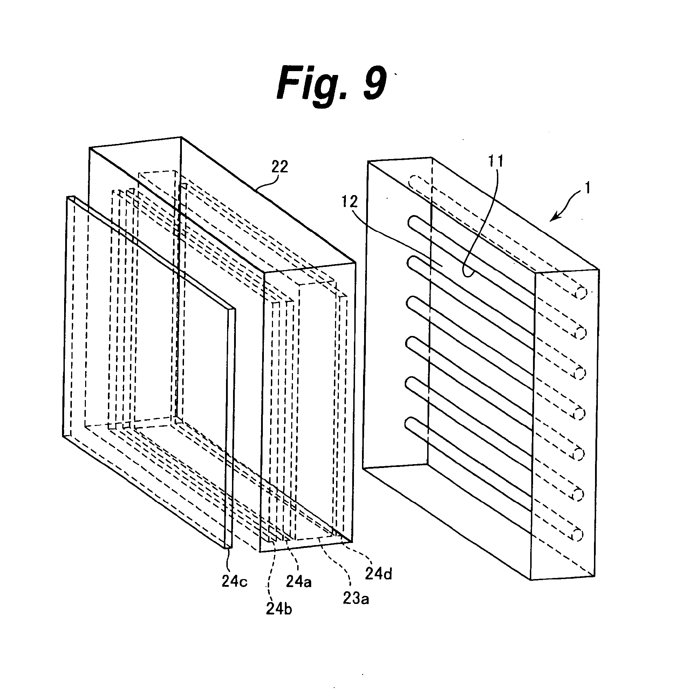

Fig. 9 shows a constructional example of a backlight according to the third embodiment of the invention. In the third embodiment, the lens film 24b such as a prism sheet is arranged in place of the reflection-type polarizer 24c arranged just under the first region R1 of the covering member 22 in the first embodiment.

The lens film 24b is a kind of optical element obtained by forming a pattern onto the surface of a transparent base material. A triangular shape is preferred as an optimum shape of the pattern formed on the surface. The light emitted from the light source 11 is reflected, refracted, and converged by the prism pattern formed on the film. Although the lens film 24b which is used in the third embodiment of the invention is not particularly limited, for example, a BEF manufactured by Sumitomo 3M Ltd. can be used.

To suppress a glare of the lens film 24b, it is suitable to allow the second region R2 of the covering member 22 to have the small diffusion property.

As shown in Fig. 9, for example, the optical element covering member 2 and the reflection-type polarizer 24c as an optical element are arranged in this order from the lighting device 1 toward the liquid crystal panel 3. In the optical element covering member 2, the diffuser plate 23a, diffuser film 24a, and the lens film 24b are covered with the covering member 22 and integrated.

(4) Fourth embodiment

The fourth embodiment is obtained by adding the optical element function to the covering member 22 in the first embodiment. In the covering member 22, the optical element functional layer is provided in at least one of the first region R1 and the second region R2. The optical element functional layer is provided, for example, in at least one of the inner surface and the outer surface of the covering member 22. The optical element functional layer is provided to execute a predetermined process to the light which has entered from the lighting device 1, thereby improving it to the light having desired properties. As an optical element functional layer, for example, a diffusion functional layer having a function for diffusing the incident light, a condenser mechanism layer having a function for converging the light, a light source dividing functional layer having the function of the light control film 24d mentioned above, or the like can be mentioned. Specifically speaking, for example, the optical element functional layer is formed by arranging a structure such as cylindrical lens, prism lens, or fly eye lens. On the other hand, wobbles may be added to the structure such as cylindrical lens or prism lens. As an optical functional layer, for example, an ultraviolet cutting functional layer (UV cutting functional layer) for cutting the ultraviolet rays, an infrared cutting functional layer (IR cutting functional layer) for cutting the infrared rays, or the like may be used.

As a method of forming the optical functional layer of the covering member 22, for example, the following method can be mentioned: a method whereby the covering member 22 is coated with a resin material and they are dried, thereby forming a diffusion functional layer; a method whereby when producing the film or sheet serving as a covering member 22, particles having a diffusion property are contained in a resin material or voids are formed therein, and a film or sheet of a single-layer or multilayer structure is produced by an extrusion molding or a coextrusion molding; a method whereby a predetermined shape is transfer-molded to a resin material such as an ultraviolet curing resin or the like, thereby forming a diffusion functional layer, a convergence functional layer such as a lens, or a light source dividing functional layer having a certain arbitrary shape; a method whereby when producing the contractible film, a contraction factor is presumed, a predetermined shape is transferred, and a layer to which the contraction property has been applied by casting is used; a method whereby after the contractible film was produced, a layer for which the foregoing functional layer has been provided by the transfer by heating and pressurizing is used; or a method whereby fine holes are mechanically formed into the film or formed therein by a heat treatment using a laser or the like.

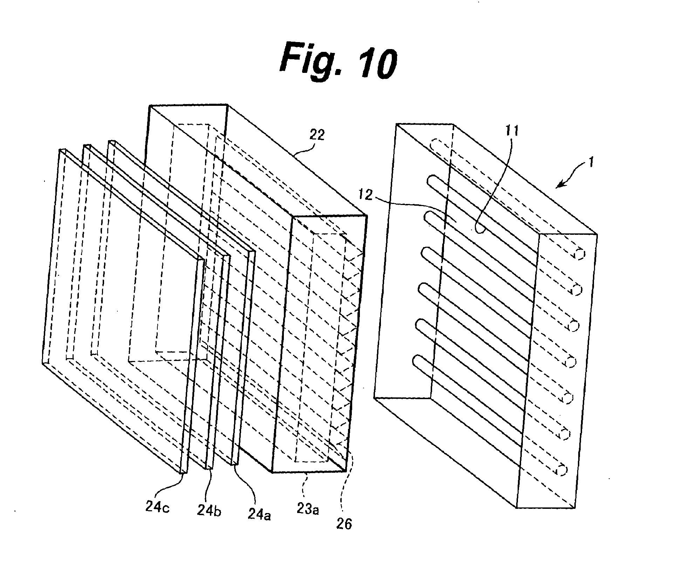

Fig. 10 shows a constructional example of a backlight according to the fourth embodiment of the invention. As shown in Fig. 10, for example, the diffuser plate 23a, diffuser film 24a, lens film 24b, and reflection-type polarizer 24c are formed in this order from the lighting device 1 toward the liquid crystal panel 3. The diffuser plate 23a is covered with the covering member 22 and a structure 26 having an unevenness removing function or the like is provided in a portion serving as an incident side among the inner surfaces of the covering member 22.

In the fourth embodiment, since the structure and the optical functional layer is provided for at least one of the inner surface and the outer surface of the covering member 22, the number of optical elements which are contained by the covering member 22 can be reduced. Therefore, the optical element covering member 2 and the liquid crystal display apparatus can be further thinned.

(5) Fifth embodiment

The covering member 22 has, for example, a belt-like shape and the edge surfaces in its longitudinal direction are bonded each other, preferably, on the edge surface of the optical element stacked member 21, or has a cylindrical shape without any bonding portions. With respect to the case where the principal surfaces of the optical element stacked member 21 have rectangular shapes of different aspect ratios, the construction of the optical element covering member 2 will be described hereinbelow.

[Construction of optical element covering member]

(First example)

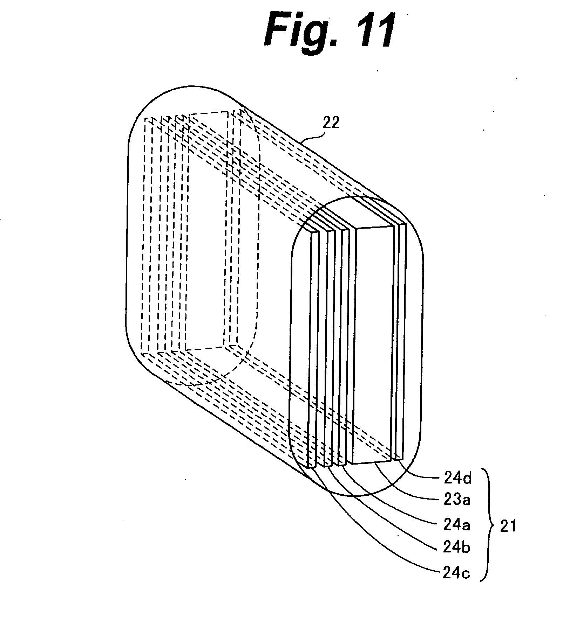

Fig. 11 shows a first constructional example of an optical element covering member according to the fifth embodiment of the invention. As shown in Fig. 11, the incident surface and the transmission surface of the optical element stacked member 21 and both edge surfaces on the side of the long side thereof are covered with the belt-shaped covering member 22 and both edge surfaces on the side of the short side of the optical element stacked member 21 are exposed. Both edge portions in the longitudinal direction of the belt-shaped covering member 22 are bonded to each other, for example, at the edge surface on the side of the long side of the optical element stacked member 21.

(Second example)

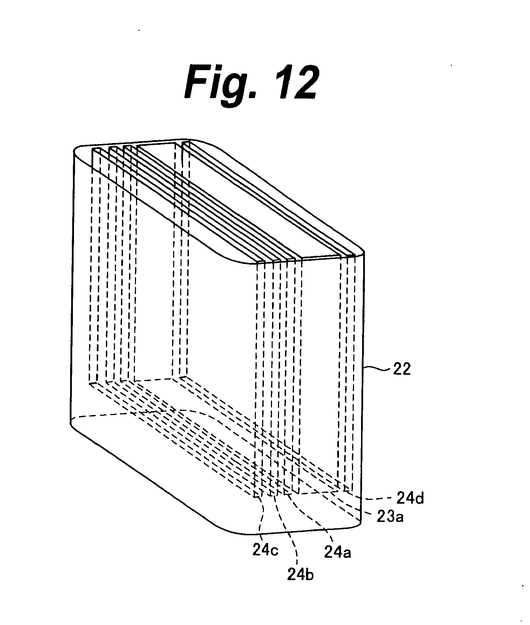

Fig. 12 shows a second constructional example of the optical element covering member according to the fifth embodiment of the invention. As shown in Fig. 12, the incident surface and the transmission surface of the optical element stacked member 21 and the both edge surfaces on the side of the short side thereof are covered with the belt-shaped covering member 22 and both side surfaces on the side of the long side of the optical element stacked member 21 are exposed. Both edge portions in the longitudinal direction of the belt-shaped covering member 22 are bonded to each other at the edge surface on the side of the short side of the optical element stacked member 21.

(Third example)

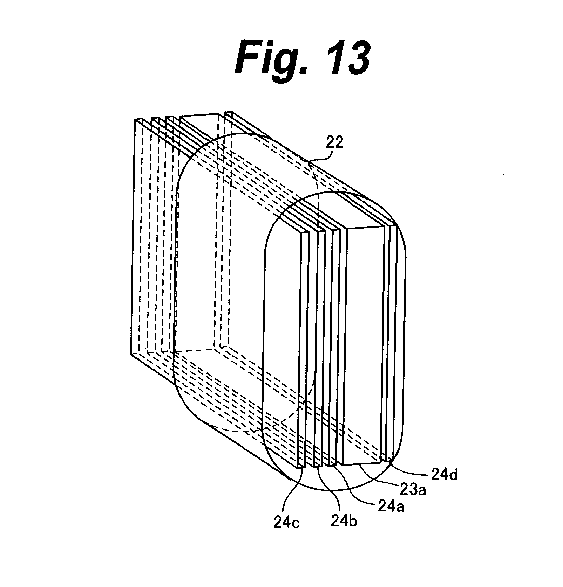

Fig. 13 shows a third constructional example of the optical element covering member according to the fifth embodiment of the invention. As shown in Fig. 13, the center portion of the optical element stacked member 21 and portions around it are covered with the belt-shaped covering member 22 and both edge portions on the side of the short side of the optical element stacked member 21 are exposed. Both edge portions in the longitudinal direction of the belt-shaped covering member 22 are bonded to each other, for example, at the edge surface on the side of the long side of the optical element stacked member 21.

[Bonding portion of covering member]

(First example)

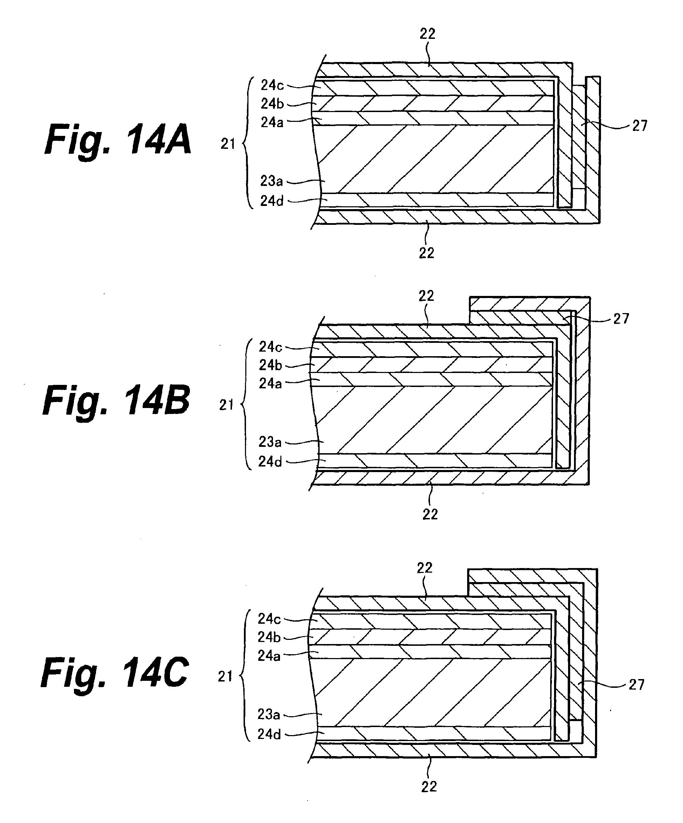

Fig. 14A shows the first example of the bonding portion of the covering member. As shown in Fig. 14A, at the edge surface of the optical element stacked member 21, the outer surface of the edge portion of the covering member 22 which covers the first principal surface of the optical element stacked member 21 and the inner surface of the edge portion of the covering member 22 which covers the second principal surface are bonded. Thus, the edge portions of the covering member 22 which covers both of the principal surfaces are bonded to each other so as to trace the edge surface of the optical element stacked member 21. A bonding portion 27 indicates the bonding position of the covering member 22. It is assumed that also in the following description, the bonding portion 27 similarly indicates the bonding position of the covering member 22.

Specifically speaking, after the whole one edge surface of the optical element stacked member 21 was covered with the edge portion of the covering member 22 which covers the first principal surface, the whole one edge surface of the optical element stacked member 21 is further covered with the edge portion of the covering member 22 which covers the second principal surface, thereby overlaying the edge portions of the covering member 22 each other. A part or all of the overlaid portion is bonded.

A bonding form is not particularly limited but any of a point bonding, a line bonding, and a surface bonding may be used. It is assumed that the bonding denotes an adhesion, a melt-bonding, and the like and a pressure sensitive bonding is also incorporated in the adhesion. Upon bonding, for example, an adhesive layer made of an adhesive as a main component is used. A pressure sensitive adhesive is also incorporated in the adhesive. The melt-bonding denotes a concept incorporating a case where the edge portions are indirectly melt-bonded each other through another member (melt-bonding layer) besides a case of directly melt-bonding the edge portions each other.

In the case of bonding the covering member 22 and the supporting medium 23 by melt-bonding, as material of the covering member 22 and the supporting medium 23, it is preferable to select materials having an excellent melt-bonding property. For example, as material of the covering member 22 and the supporting medium 23, it is preferable to use the same kind of material. It is preferable that the bonding portion of the covering member 22 and the supporting medium 23 has transparency from a viewpoint of suppressing the deterioration in display properties. As a combination of the supporting medium 23/covering member 22 having the transparency, for example, polycarbonate supporting medium/polycarbonate covering member, polystyrene supporting medium/polystyrene covering member, or polyolefin system supporting medium/polyolefin system covering member can be mentioned.

In the case of a material which cannot bond the covering member 22 and the supporting medium 23 by the melt-bonding or adhesion, the covering member 22 and the supporting medium 23 may be bonded by a mechanical bonding method. As a mechanical bonding method, for example, a bonding method such as caulking, insertion, or sandwiching can be used.

(Second example)

Fig. 14B shows the second example of the bonding portion of the covering member. As shown in Fig. 14B, at the outer edge of the first principal surface of the optical element stacked member 21, the outer surface near the edge portion of the covering member 22 which covers the first principal surface of the optical element stacked member 21 and the inner surface of the edge portion of the covering member 22 which covers the second principal surface are bonded.

Specifically speaking, after the whole one edge surface of the optical element stacked member 21 was covered with the edge portion of the covering member 22 which covers the first principal surface, a region from the whole one edge surface of the optical element stacked member 21 to the outer edge of the first principal surface is further covered with the edge portion of the covering member 22 which covers the second principal surface, thereby overlaying the edge portions of the covering member 22 each other. A part or all of the overlaid portion is bonded.

(Third example)

Fig. 14C shows the third example of the bonding portion of the covering member. As shown in Fig. 14C, the third example differs from the second example with respect to a point that at the edge surface of the optical element stacked member 21, the outer surface of the edge portion of the covering member 22 which covers the first principal surface of the optical element stacked member 21 and the inner surface of the edge portion of the covering member 22 which covers the second principal surface are bonded.

(Fourth example)

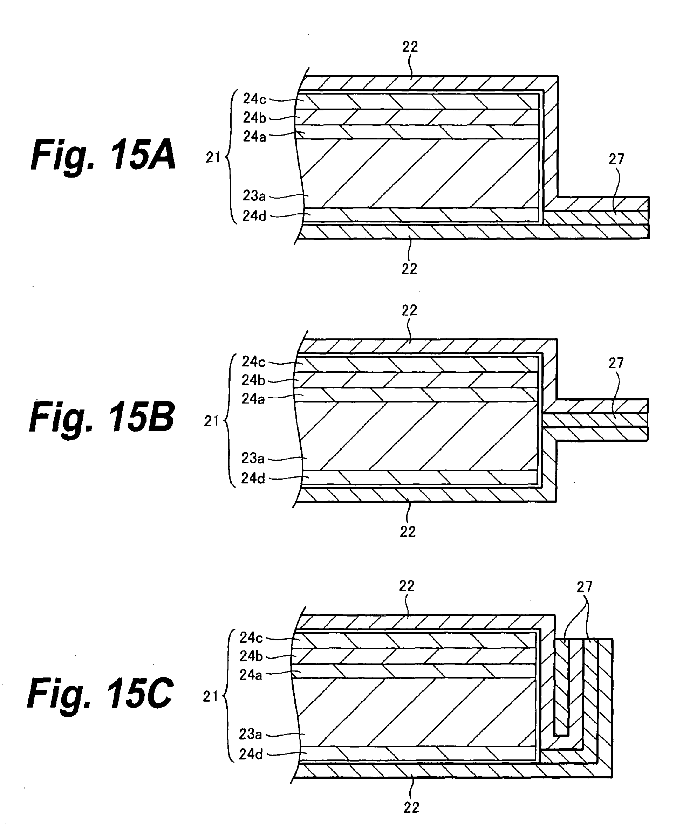

Fig. 15A shows the fourth example of the bonding portion of the covering member. As shown in Fig. 15A, in a corner portion of the optical element stacked member 21, the inner surface of the edge portion of the covering member 22 which covers the first principal surface of the optical element stacked member 21 and the inner surface of the edge portion of the covering member 22 which covers the second principal surface are bonded. Thus, in the corner portion of the optical element stacked member 21, the edge portions of the covering member 22 which covers both of the principal surfaces are bonded each other so as to protrude from the edge surface of the optical element stacked member 21.

(Fifth example)

Fig. 15B shows the fourth example of the bonding portion of the covering member. As shown in Fig. 15B, the fifth example differs from the fourth example with respect to a point that at the almost center of the edge surface of the optical element stacked member 21, the edge portions of the covering member 22 which covers both of the principal surfaces are bonded each other.

(Sixth example)

Fig. 15C shows the sixth example of the bonding portion of the covering member. As shown in Fig. 15C, the sixth example differs from the fourth example with respect to a point that the bonding portion protruded from the edge surface of the optical element stacked member 21 is bent and is further bonded to the edge surface of the optical element stacked member 21.

[Producing method of optical element covering member]

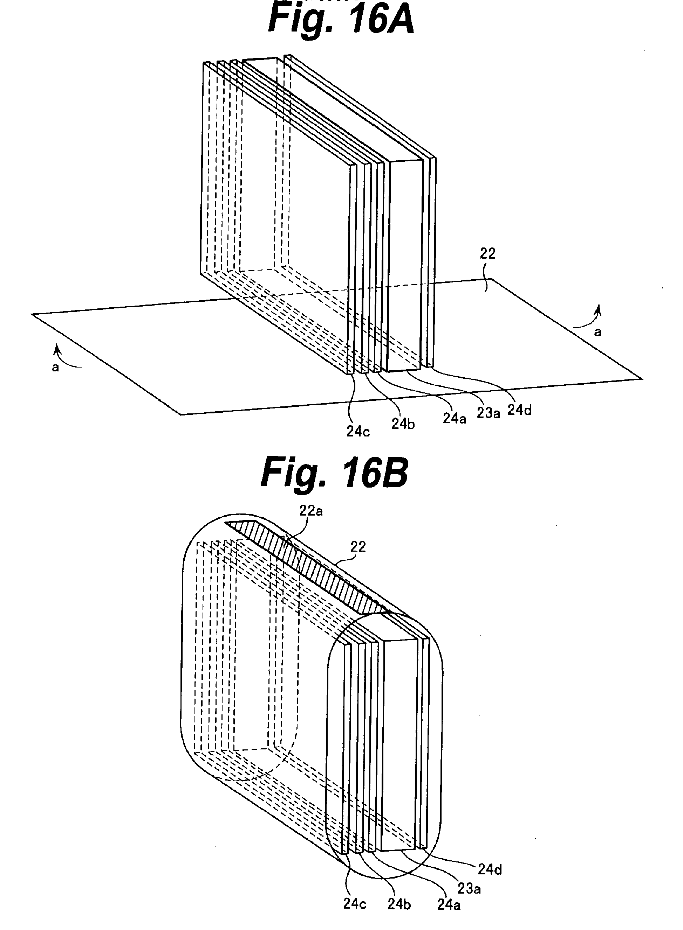

Subsequently, an example of the producing method of the optical element covering member 2 having the foregoing construction will be described. First, as shown in Fig. 16A, the one or a plurality of overlaid optical elements 24 and the supporting medium 23 are put, for example, onto the belt-shaped covering member 22. Subsequently, as shown by arrows a in Fig. 16A, for example, both edge portions in the longitudinal direction of the belt-shaped covering member 22 are lifted up and the one or a plurality of overlaid optical elements 24 and the supporting medium 23 are covered with the covering member 22. Subsequently, as shown in Fig. 16B, for example, the edge portions in the longitudinal direction of the covering member 22 are bonded each other at the edge surface of one or a plurality of optical elements 24 or the supporting medium 23. As a bonding method, for example, the adhesion by the adhesive or melt-bonding or the like can be mentioned. As an adhering method by the adhesive, for example, there can be mentioned: a hot-melt type adhering method; a thermosetting type adhering method; a pressure sensitive (sticky) type adhering method; an energy beam hardening type adhering method; a hydration type adhering method; a hygroscopic/resoluble type adhering method; or the like. As an adhering method by the melt-bonding, for example, a thermal melt-bonding, an ultrasonic melt-bonding, a laser melt-bonding, or the like can be mentioned. After that, the covering member 22 may be thermally contracted by applying a heat to the covering member 22 as necessary.

As another example of the producing method of the optical element covering member 2, the one, two, or more overlaid optical elements 24 and the supporting medium 23 are inserted into the cylindrical covering member 22. After that, the covering member 22 may be thermally contracted by applying a heat to the covering member 22 as necessary.

The target optical element covering member 2 is obtained in this manner.

(Sixth example)

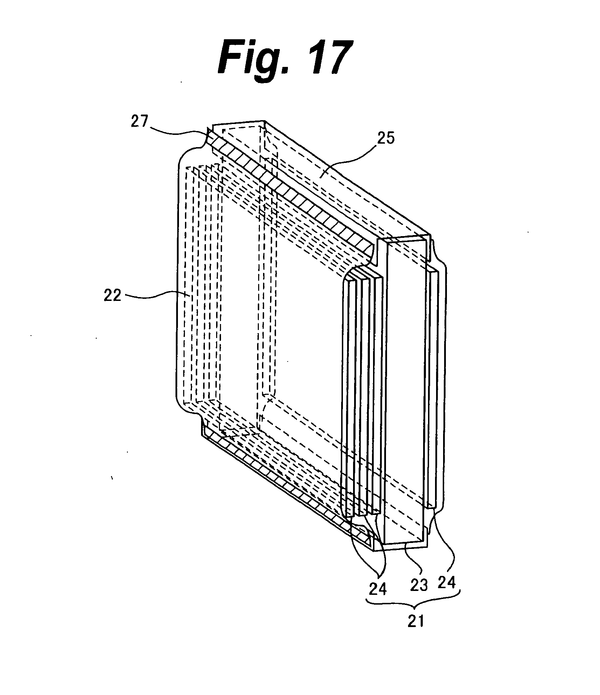

Fig. 17 shows an example of a construction of an optical element covering member according to the sixth embodiment. The sixth example differs from the first example with respect to a point that a bonding member 25 is arranged in a part or all of the outer edge of the optical element stacked member 21 and the covering member 22 which covers the first principal surface and the covering member 22 which covers the second principal surface are bonded to the bonding member 25.

The bonding member 25 has, for example, a film-like shape, a sheet-like shape, a plate-like shape, or a block-like shape. As a whole shape of the bonding member 25, for example, an elongated rectangular shape, a frame-like shape, or the like can be mentioned. As a frame-like shape, for example, a frame-like shape which covers three or four sides of the optical element stacked member 21 can be mentioned. As a material of the bonding member, for example, a high polymer material or an inorganic material can be used. The bonding material 25 is not limited to the material having transparency but a material having opaqueness can be also used. As a high polymer material, for example, a material similar to that of the covering member 22, supporting medium 23, or optical element 24 can be used. As an inorganic material, for example, a metal, glass, or the like can be used. The covering member 22 bonded by the bonding member 25 has, for example, a cylindrical or sack-like shape.

It is preferable that the bonding member 25 has an optical function. It is preferable that it has a reflecting function as an optical function. This is because a light leakage from the edge surface of the optical element stacked member 21 is, consequently, suppressed and the luminance of the liquid crystal display apparatus can be improved.

It is preferable that the bonding member 25 has the heat contraction property or the extension property. Since the bonding member 25 has the heat contraction property, in the producing step of the optical element covering member, by heating and contracting only the bonding member 25, the optical element stacked member 21 and the covering member 22 can be closely adhered. That is, a damage due to the heating to the optical element stacked member 21 can be suppressed. Since the bonding member 25 has the extension property, the optical element covering member 2 can be produced as follows. First, the edge portions of the covering member 22 are bonded by the bonding member 25, the covering member 22 is set into a cylindrical shape or the like, and thereafter, the bonding member 25 is extended and the optical element stacked member 25 is contained in the covering member 22. After that, the extension of the bonding member 25 is released, thereby contracting the bonding member 25. Thus, the optical element stacked member 21 can be contained by the covering member 22. In the case where the optical element covering member 2 is produced in this manner, since the step of heating the covering member 22 is unnecessary in the producing step, a deterioration of the properties of the optical element stacked member 21 due to the heating is eliminated.

[Bonding portion of covering member]

(First example)

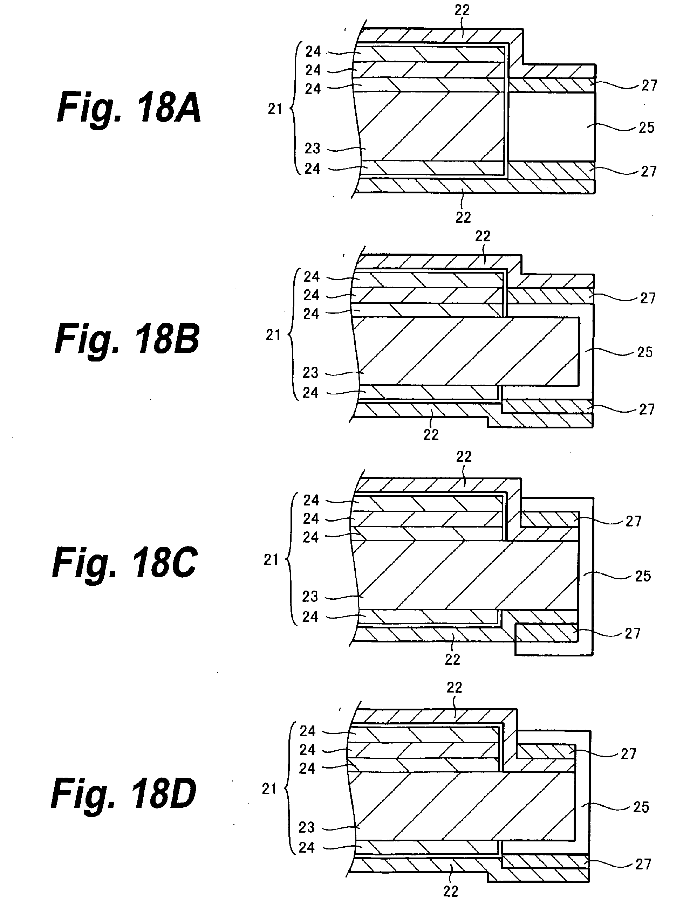

Fig. 18A shows the first example of the bonding portion of the covering member. As shown in Fig. 18A, the plate-shaped bonding member 25 is arranged at the outer edge of the optical element stacked member 21. The covering member 22 which covers the first principal surface of the covering member 22 and the edge portion of the covering member 22 which covers the second principal surface are bonded to both surfaces of the bonding member 25, respectively.

(Second example)

Fig. 18B shows the second example of the bonding portion of the covering member. As shown in Fig. 18B, the bonding member 25 having an almost U-character-shaped cross section is arranged at the outer edge of the optical element stacked member 21. The edge surface of the supporting medium 23 and the outer edges of both of the principal surfaces are covered with the bonding member 25, respectively. At the outer edge of the first principal surface of the supporting medium 23, the outer surface of the bonding member 25 and the inner surface of the edge portion of the covering member 22 are bonded. At the outer edge of the second principal surface of the supporting medium 23, the outer surface of the bonding member 25 and the inner surface of the edge portion of the covering member 22 are bonded. The inner surface of the bonding member 25 denotes the surface which faces the principal surface of the supporting medium 23. The outer surface of the bonding member 25 denotes the surface on the side opposite to the inner surface.

(Third example)

Fig. 18C shows the third example of the bonding portion of the covering member. As shown in Fig. 18C, the third example differs from the second example with respect to a point that at the outer edges of both of the principal surfaces of the supporting medium 23, the inner surface of the edge portion of the bonding member 25 and the outer surface of the edge portion of the covering member 22 are bonded.

(Fourth example)

Fig. 18D shows the fourth example of the bonding portion of the covering member. As shown in Fig. 18D, at the outer edge of the first principal surface of the supporting medium 23, the inner surface of the bonding member 25 and the outer surface of the edge portion of the covering member 22 are bonded. On the other hand, at the outer edge of the second principal surface of the supporting medium 23, the outer surface of the bonding member 25 and the inner surface of the edge portion of the covering member 22 are bonded. The fourth example is similar to the second example with respect to points other than the above point.

(Fifth example)

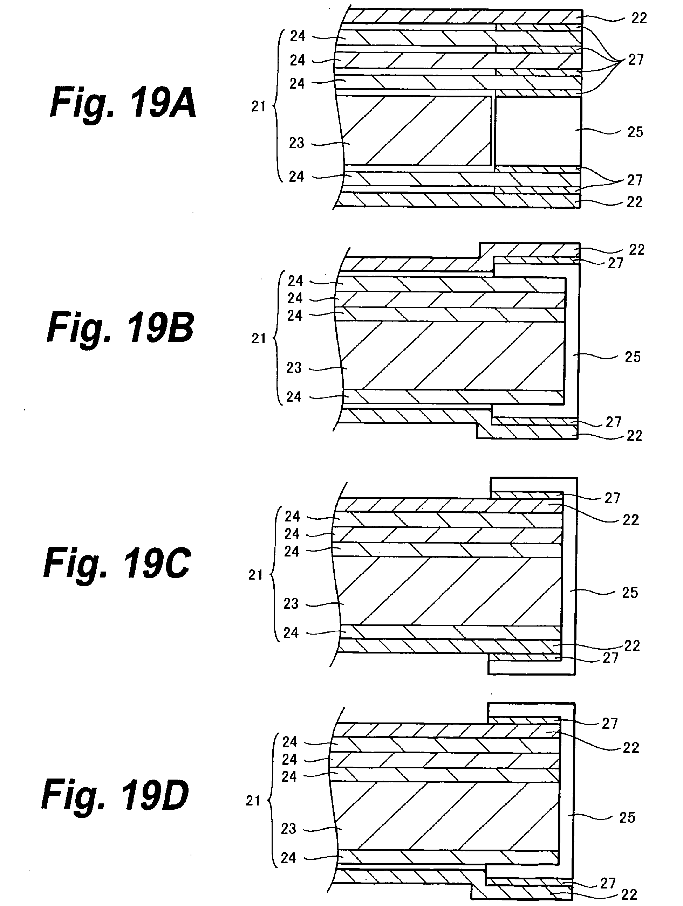

Fig. 19A shows the fifth example of the bonding portion of the covering member. As shown in Fig. 19A, the plate-shaped bonding member 25 is arranged at the outer edge of the supporting medium 23. The outer edges of the optical elements 22 stacked onto both of the principal surfaces of the supporting medium 23 are bonded to the both surfaces of the bonding member 25, respectively. When two or more optical elements 22 have been stacked onto both of the principal surfaces of the supporting medium 23, the outer edges of the stacked optical elements 24 are bonded. The outer edge of the covering member 22 is bonded to the outer edges of the optical element 24 serving as a top surface.

(Sixth example)

Fig. 19B shows the sixth example of the bonding portion of the covering member. As shown in Fig. 19B, the sixth example differs from the second example with respect to a point that the edge surface of the optical element stacked member 21 and the outer edges of both of the principal surfaces are covered with the bonding member 25.

(Seventh example)

Fig. 19C shows the seventh example of the bonding portion of the covering member. As shown in Fig. 19C, the seventh example differs from the sixth example with respect to a point that at the outer edges of both of the principal surfaces of the optical element stacked member 21, the inner surface of the edge portion of the bonding member 25 and the outer surface of the edge portion of the covering member 22 are bonded.

(Eighth example)

Fig. 19D shows the eighth example of the bonding portion of the covering member. As shown in Fig. 19D, at the outer edge of the first principal surface of the optical element stacked member 21, the inner surface of the bonding member 25 and the outer surface of the edge portion of the covering member 22 are bonded. On the other hand, at the outer edge of the second principal surface of the optical element stacked member 21, the outer surface of the bonding member 22 and the inner surface of the edge portion of the covering member 22 are bonded. The eighth example is similar to the sixth example with respect to points other than the above point.

(7) Seventh embodiment

(7-1) Construction of liquid crystal display apparatus

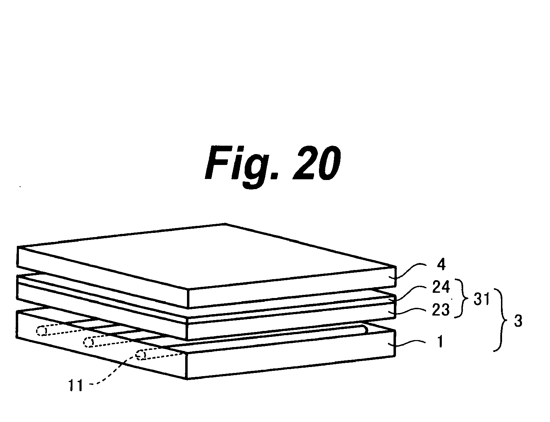

Fig. 20 shows a constructional example of a liquid crystal display apparatus according to the seventh embodiment of the invention. This liquid crystal display apparatus differs from the first embodiment with respect to a point that it has an optical element stacked member 31 in place of the optical element covering member 21. Portions similar to those in the foregoing first embodiment are designated by the same reference numerals and their explanation is omitted.

[Optical element stacked member]

The optical element stacked member 31 has the supporting medium 23 and the optical element 24 stacked to the transmission surface (first principal surface) side of the supporting medium. It is preferable to closely adhere the optical element 24 and the supporting medium 23 from a viewpoint of suppressing the deterioration in image. It is preferable that the optical element 24 has the contraction property or the extension property. This is because a tension can be, thus, applied to the optical element 24 bonded to the supporting medium 23 and the optical element 24 and the supporting medium 23 can be closely adhered. The optical element 24 is bonded to at least one of the transmission surface and the edge surface which the supporting medium 23 has. In the case where the rectangular optical element 24 is bonded to the transmission surface of the rectangular supporting medium 23, the optical element 24 is bonded to at least two facing sides among the outer edges of the supporting medium 23. Specifically speaking, the optical element 24 is bonded to the two facing sides, three sides, or four sides among the outer edges of the supporting medium 23.

The bonding form is not particularly limited but any of a point bonding, a line bonding, and a surface bonding may be used. The bonding denotes the adhesion, melt-bonding, and the like here and it is assumed that the pressure sensitive bonding is also incorporated in the adhesion. Upon adhering, for example, an adhesive layer made of an adhesive as a main component is used. A pressure sensitive adhesive is also incorporated in the adhesive. The melt-bonding denotes the concept incorporating a case where the edge portions are indirectly melt-bonded each other through another member (melt-bonding layer) besides the case of directly melt-bonding the edge portions each other.

In the case of bonding the optical element 24 and the supporting medium 23 by melt-bonding, as material of the optical element 24 and the supporting medium 23, it is preferable to select materials having an excellent melt-bonding property. For example, as material of the optical element 24 and the supporting medium 23, it is preferable to use the same kind of material. It is preferable that the bonding portion of the optical element 24 and the supporting medium 23 has transparency from a viewpoint of suppressing the deterioration in display properties. As a combination of the supporting medium 23/optical element 24 having the transparency, for example, polycarbonate supporting medium/polycarbonate optical element, polystyrene supporting medium/polystyrene optical element, or polyolefin system supporting medium/polyolefin system optical element can be mentioned.

In the case of the material which cannot bond the optical element 24 and the supporting medium 23 by the melt-bonding or adhesion, the optical element 24 and the supporting medium 23 may be bonded by a mechanical bonding method. As a mechanical bonding method, for example, a bonding method such as caulking, insertion, or sandwiching can be used.

[Tensile force which acts on optical element]

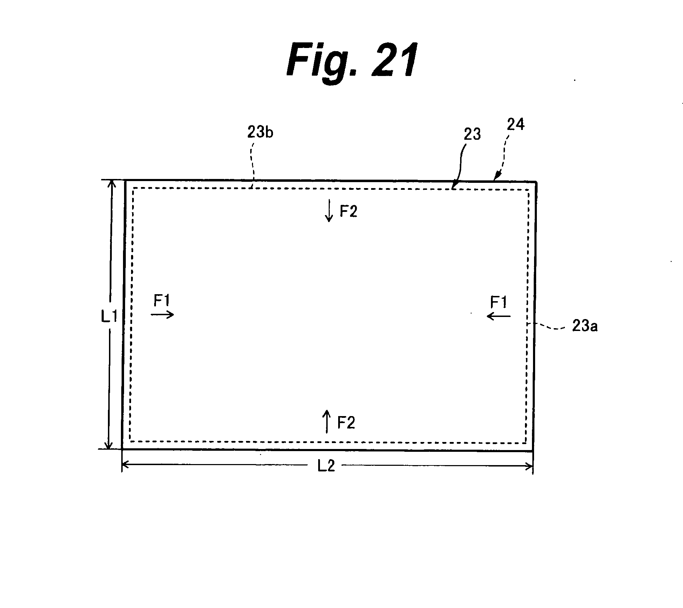

Fig. 21 is a schematic plan view showing a relation between each side of the supporting medium 23 and the tensile force F of the optical element 24 which acts in the direction perpendicular to each side. The supporting medium 23 has a rectangular principal surface. The rectangular principal surface is formed by: the first sides 23a and 23a which face each other; and the second sides 23b and 23b which perpendicularly cross the first sides and face each other. The thickness t of the supporting medium 23, the lengths L1 and L2 of the first side 23a and the second side 23b of the supporting medium 23, and the tensile forces F2 and F1 of the optical element 24 which respectively acts in parallel on the first side 23a and the second side 23b satisfy the following relational expressions (2) and (3) at a temperature of 70°C:

$$0 \leq F1 \leq 1.65 \times 10^{4} \times t/L2 \quad . \quad . \quad . \quad (2)$$

$$0 \leq F2 \leq 1.65 \times 10^{4} \times t/L1 \quad . \quad . \quad . \quad (3)$$

By satisfying those relational expressions, the defective picture quality or the like due to the warp of the optical element stacked member 31 can be reduced.

[Bonding position of optical element]

(First example)

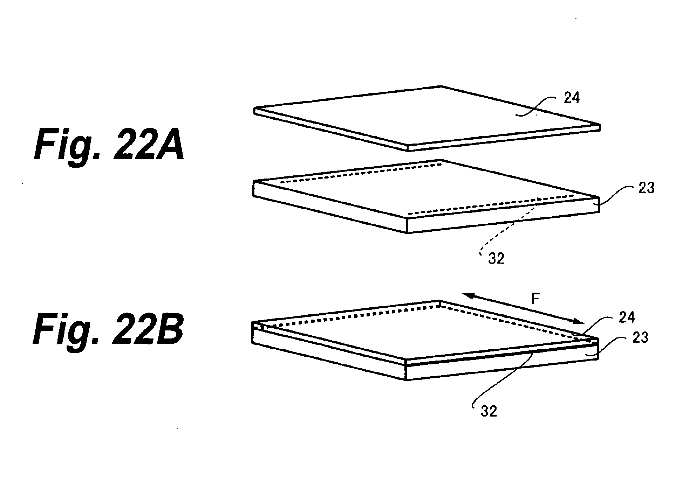

Fig. 22 shows the first example of the bonding position of the optical element. In the first example, the outer edge of the optical element 24 is bonded to the two facing sides among the outer edges of the transmission surface (first principal surface) of the supporting medium 23 having the rectangular shape. The tensile force F is applied to the optical element 24 in the direction perpendicular to the two facing sides of the supporting medium 23 to which the optical element 24 is bonded.

(Second example)

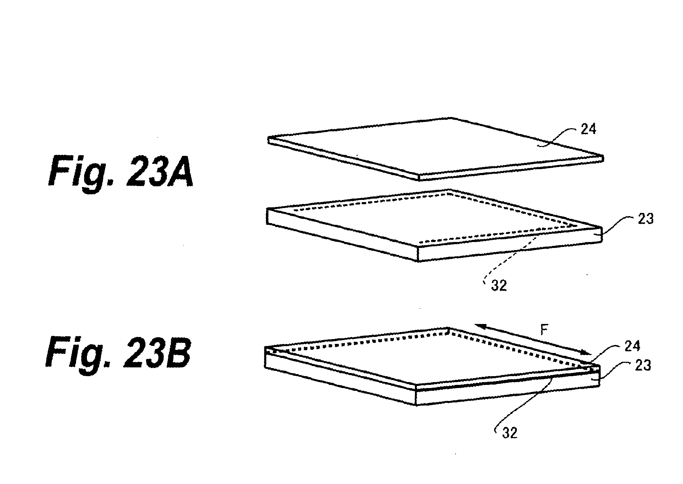

Fig. 23 shows the second example of the bonding position of the optical element. In the second example, the outer edge of the optical element 24 is bonded to three sides among the outer edges of the transmission surface (first principal surface) of the supporting medium 23 having the rectangular shape. The tensile force F is applied to the optical element 24 in the direction perpendicular to the two facing sides of the supporting medium 23 to which the optical element 24 is bonded.

(Third example)

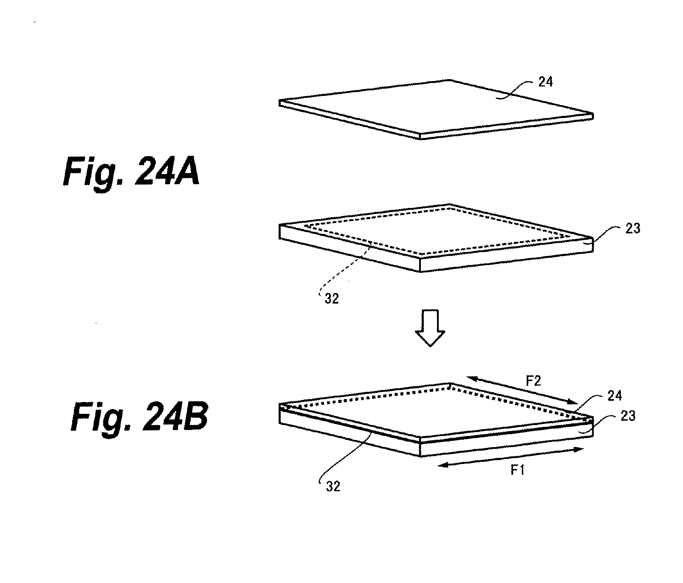

Fig. 24 shows the third example of the bonding position of the optical element. In the third example, the outer edge of the optical element 24 is bonded to all of four sides of the transmission surface (first principal surface) of the supporting medium 23 having the rectangular shape. The tensile forces F1 and F2 are applied to the optical element 24 in the direction perpendicular to the two facing sides of the supporting medium 23.

(7-2) Producing method of liquid crystal display apparatus

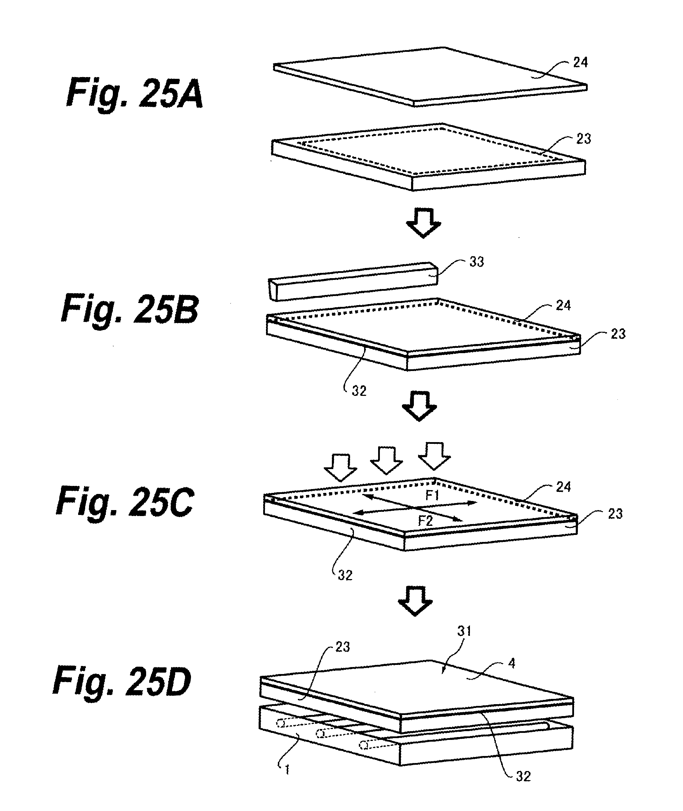

Subsequently, an example of a producing method of the liquid crystal display apparatus having the foregoing construction will be described with reference to Figs. 25A to 25D.
First, as shown in Fig. 25A, the supporting medium 23 and the optical element 24 each having a rectangular shape are prepared and the optical element 24 is stacked onto the supporting medium 23. Subsequently, as shown in Fig. 25B, a heater block 33 made of a metal such as copper is pressed onto the optical element 24 and the outer edge portions of the supporting medium 23 and the optical element 24 are thermally melt-bonded. The thermal melt-bonding position is, for example, set to two facing sides, three sides, or four sides of the supporting medium 23 and the optical element 24 each having a rectangular shape.
Subsequently, as shown in Fig. 25C, a heating treatment is executed to the supporting medium 23 and the optical element 24 which were bonded by the thermal melt-bonding, thereby contracting the optical element 24. Thus, the force F is applied to the optical element 24 in the direction perpendicular to the two facing sides among the sides bonded to the supporting medium 23, so that the supporting medium 23 and the optical element 23 are closely adhered. The optical element stacked member 31 is obtained as mentioned above.
Subsequently, the optical element stacked member 31 and the liquid crystal panel are sequentially disposed onto the lighting device 1 and the disposing position is properly adjusted. Thus, the liquid crystal display apparatus is obtained as shown in Fig. 25D.

(8) Eighth embodiment

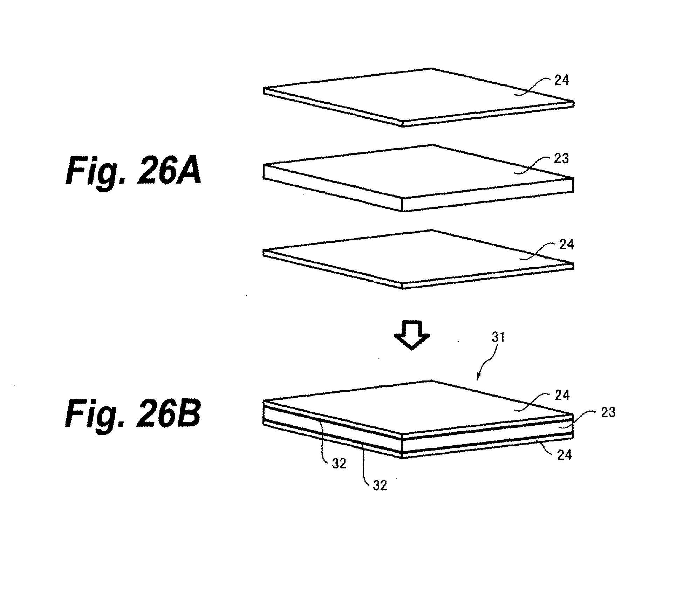

Fig. 26 shows a constructional example of an optical element stacked member according to the eighth embodiment of the invention. As shown in Fig. 26, the optical element stacked member differs from the seventh embodiment with respect to a point that it has the optical element 24 stacked onto the incident surface (second principal surface) of the supporting medium 23. Portions similar to those in the foregoing seventh embodiment are designated by the same reference numerals and their description is omitted.

The optical element 24 is bonded to at least one of the incident surface and the edge surface which the supporting medium 23 has. In the case where the rectangular optical element 24 is bonded to the incident surface of the rectangular supporting medium 23, the optical element 24 is bonded to at least the two facing sides among the outer edges of the supporting medium 23. Specifically speaking, the optical element 24 is bonded to the two facing sides, three sides, or four sides among the outer edges of the supporting medium 23. It is preferable to closely adhere the optical element 24 and the supporting medium 23 from a viewpoint of suppressing the deterioration in image.

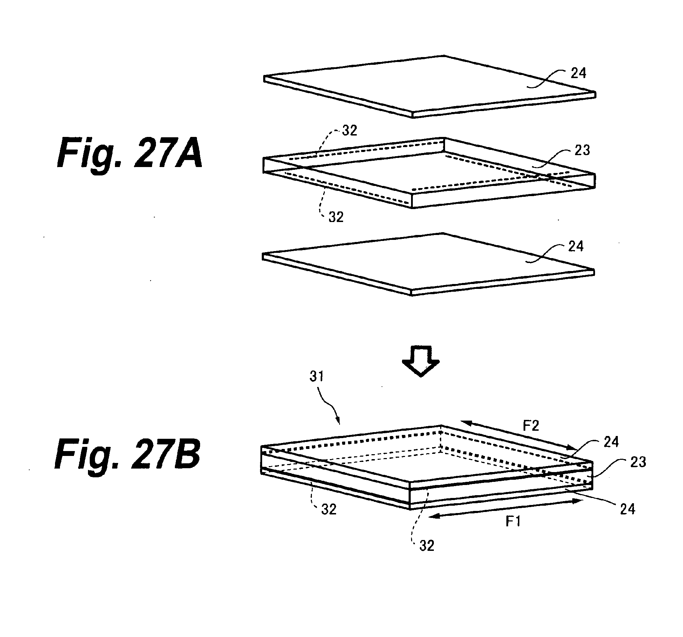

Fig. 27 shows an example of bonding positions of the optical elements stacked respectively onto both of the principal surfaces of the supporting medium. As shown in Fig. 27, when the rectangular optical element 24 is bonded to the two facing sides of the rectangular supporting medium 23, the optical element 24 is bonded to, for example, the two facing sides which differ on both of the principal surfaces of the supporting medium 24.

[Bonding portion of covering member]

(First example)

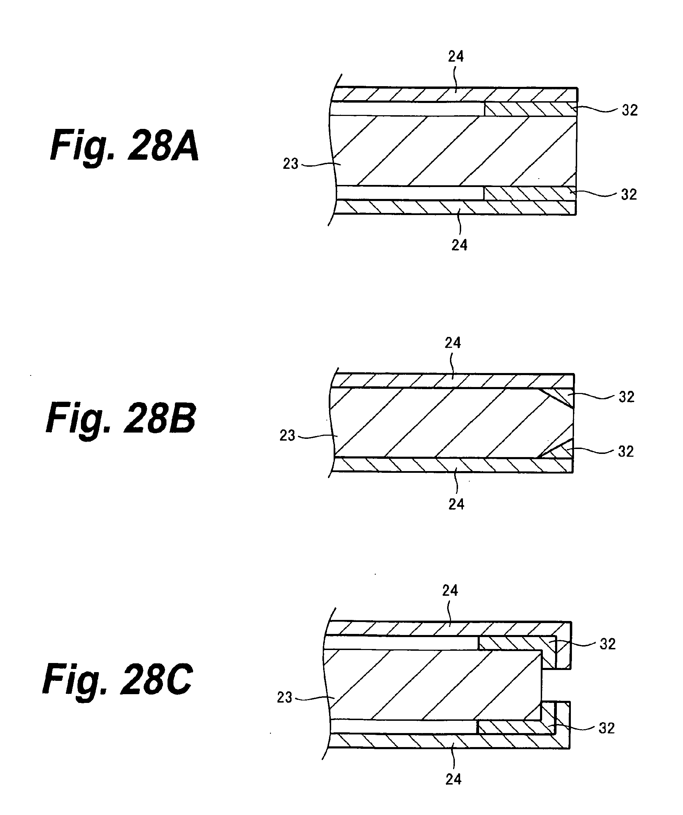

Fig. 28A shows the first example of the bonding portion of the optical element stacked member. As shown in Fig. 28A, the optical element stacked member 31 has: the supporting medium 23; the optical element 24 stacked onto the incident surface (second principal surface) of the supporting medium 23; and the optical element 24 stacked onto the transmission surface (second principal surface). The outer edges of the optical element 24 stacked onto both surfaces are bonded to the outer edges of the supporting medium 23, respectively.

(Second example)

Fig. 28B shows the second example of the bonding portion of the optical element stacked member. As shown in Fig. 28B, the second example differs from the first example with respect to a point that a corner of the supporting medium 23 is chamfered and becomes an inclined surface. The chamfered inclined surface is, for example, a C surface or an R surface. Portions between the inclined surface of the supporting medium 23 and the optical elements 24 which cover the incident surface and the transmission surface of the supporting medium 23 are filled with an adhesive. Thus, the outer edge of the optical element 24 which covers the incident surface of the supporting medium 23 is bonded to the outer edge of the supporting medium 23.

(Third example)

Fig. 28C shows the third example of the bonding portion of the optical element stacked member. As shown in Fig. 28C, the third example differs from the first example with respect to a point that each of the optical elements 24 which are stacked onto both of the principal surfaces of the supporting medium 23 has a side wall portion at its outer edge. It is preferable to further bond the side wall portion of the optical element 24 and the edge surface of the supporting medium 23. At the edge surface of the supporting medium 23, a space is formed between the side wall portions of the optical elements 24 stacked onto both of the principal surfaces of the supporting medium 23 and a part of the edge surface of the supporting medium 23 is exposed.

(Fourth example)

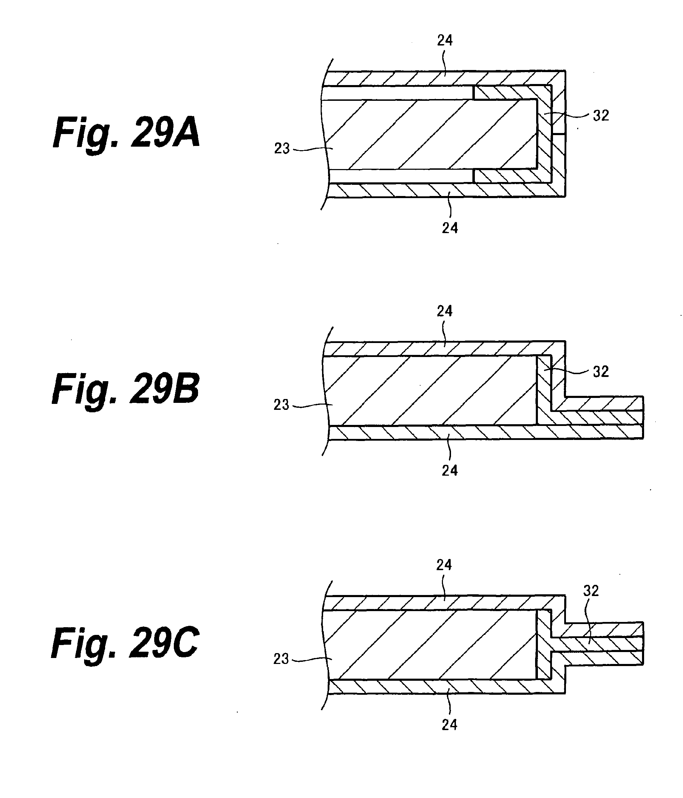

Fig. 29A shows the fourth example of the bonding portion of the optical element stacked member. As shown in Fig. 29A, the fourth example differs from the third example with respect to a point that at the edge surface of the supporting medium 23, front edges of the side wall portions of the optical elements 24 stacked onto both of the principal surfaces of the supporting medium 23 are come into contact with each other, thereby preventing the edge surface of the supporting medium 23 from being exposed.

(Fifth example)

Fig. 29B shows the fifth example of the bonding portion of the optical element stacked member. As shown in Fig. 29B, the fifth example differs from the first example with respect to a point that the optical elements 24 are bonded to the edge surface of the supporting medium 23. The outer edges of the optical elements 24 stacked onto both of the principal surfaces of the supporting medium 23 are bonded each other. This bonding is a bonding of, for example, the inner surfaces of the optical elements 24. One of the optical elements 24 whose outer edges were bonded is bonded to the edge surface of the supporting medium 23.

(Sixth example)

Fig. 29C shows the sixth example of the bonding portion of the optical element stacked member. As shown in Fig. 29C, the sixth example differs from the fifth example with respect to a point that both of the optical elements 24 whose outer edges were bonded are bonded to the edge surface of the supporting medium 23.

(8) Ninth embodiment

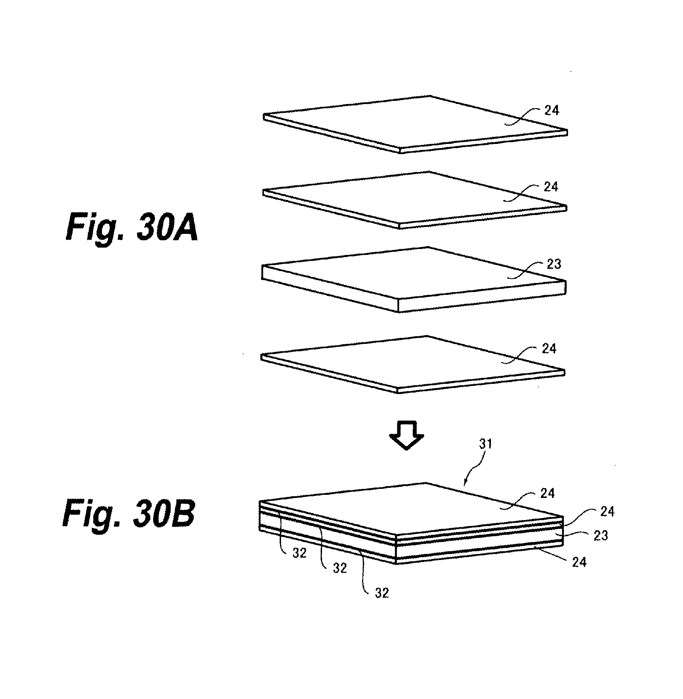

Fig. 30 shows a constructional example of an optical element stacked member according to the ninth embodiment of the invention. As shown in Fig. 30, the optical element stacked member 31 differs from the eighth embodiment with respect to a point that two or more optical elements 24 are stacked onto at least one of the incident surface (second principal surface) and the transmission surface (first principal surface) of the supporting medium 23. An example in which the two or more optical elements 24 are stacked onto the transmission surface (first principal surface) of the supporting medium 23 is shown in Fig. 30.

The optical elements 24 are bonded to the supporting medium 23, for example, as follows. The optical element 24 serving as a supporting medium side among the two or more stacked optical elements 24 is bonded to the supporting medium 23. The two or more stacked optical elements 24 are bonded each other on at least the two facing sides.

The optical element 24 serving as a top surface (obverse surface) among the two or more stacked optical elements 24 is bonded to the supporting medium 23. Other optical elements are arranged in an enclosing space which is formed between the optical element 24 serving as a top surface and the supporting medium 23.

It is preferable that the thickness t of the supporting medium 23, the length L of the side of the supporting medium 23, and a total F of the tensile forces which respectively act on the two or more stacked optical elements 24 satisfy the following relational expression (1) under an environment of a temperature of 70°C:

$$0 \leq F \leq 1.65 \times 10^4 \times t/L \quad \ldots \quad (1)$$

(where, in the expression (1), t, L, and F indicate as follows,
t: distance between the first principal surface and the second principal surface of the supporting medium 23,
L: lengths of two facing sides to which the optical element 24 has been bonded among the sides constructing a surface perpendicular to the thickness t, and
F: total of the tensile forces of the optical elements which act in the direction parallel with the sides of the length L).

[Bonding portion of covering member]

(First example)

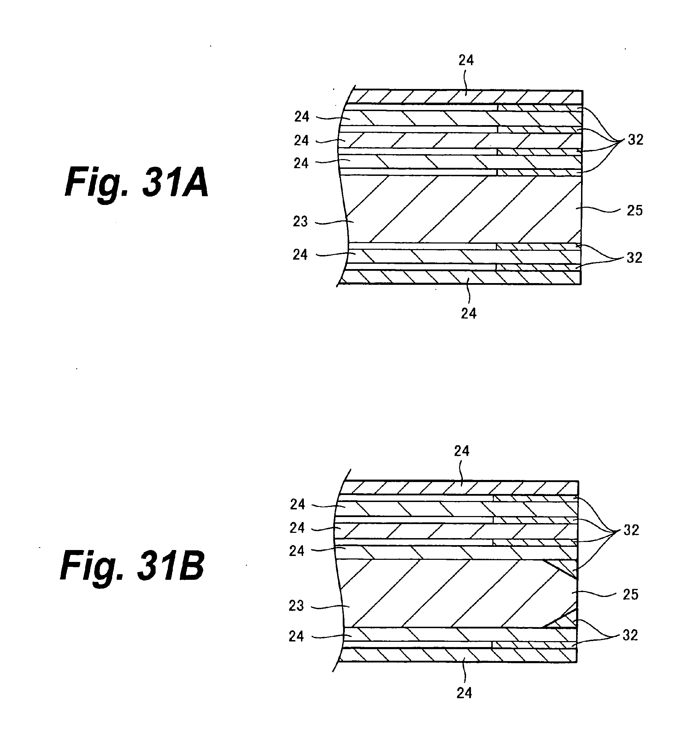

Fig. 31A shows the first example of the bonding portion of the optical element covering member. As shown in Fig. 31A, the optical elements 24 are bonded to the outer edges of the incident surface and the transmission surface of the supporting medium 23. The two or more optical elements 24 stacked onto the incident surface and the transmission surface of the supporting medium 23 are bonded each other on at least the two facing sides.

(Second example)

Fig. 31B shows the second example of the bonding portion of the optical element covering member. As shown in Fig. 31B, the second example differs from the first example with respect to a point that, in the supporting medium 23, a corner of the supporting medium 23 is chamfered and becomes an inclined surface. The chamfered inclined surface is, for example, the C surface or the R surface. Portions between the inclined surface of the supporting medium 23 and the optical elements 24 which cover the incident surface and the transmission surface of the supporting medium 23 are filled with the adhesive. Thus, the outer edge of the optical element 24 which covers the incident surface of the supporting medium 23a is bonded to the outer edge of the supporting medium 23.

(Third example)

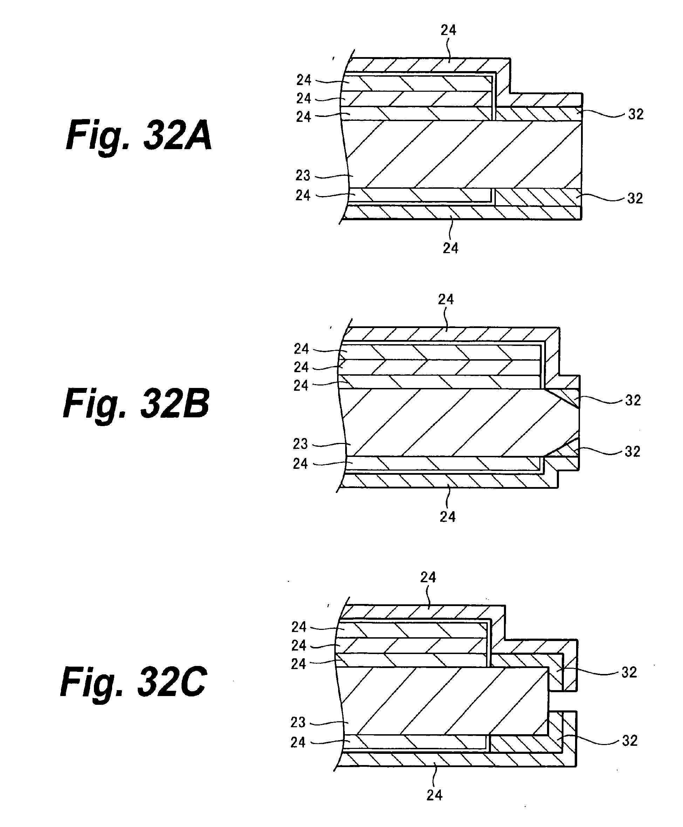

Fig. 32A shows the third example of the bonding portion of the optical element stacked member. As shown in Fig. 32A, the third example differs from the first example of the eighth embodiment with respect to a point that other optical elements are enclosed in enclosing spaces which are formed between the optical element 24 serving as a top surface and the incident surface and the transmission surface of the supporting medium 23.

(Fourth example)

Fig. 32B shows the fourth example of the bonding portion of the optical element stacked member. As shown in Fig. 32B, the fourth example differs from the second example of the eighth embodiment with respect to a point that other optical elements are enclosed in enclosing spaces which are formed between the optical element 24 serving as a top surface and the incident surface and the transmission surface of the supporting medium 23.

(Fifth example)

Fig. 32C shows the fifth example of the bonding portion of the optical element stacked member. As shown in Fig. 32C, the fifth example differs from the third example of the eighth embodiment with respect to a point that other optical elements are enclosed in enclosing spaces which are formed between the optical element 24 serving as a top surface and the incident surface and the transmission surface of the supporting medium 23.

(Sixth example)

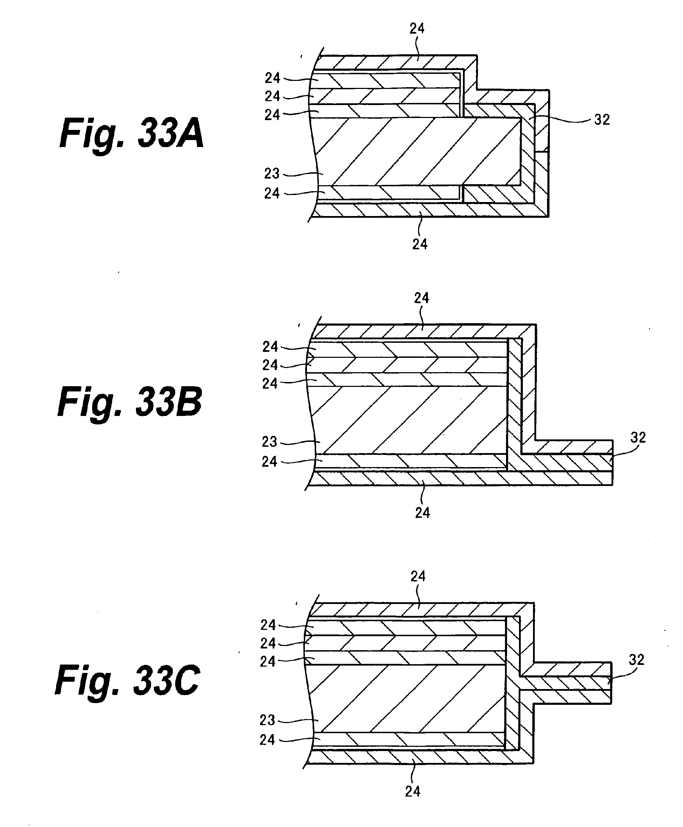

Fig. 33A shows the sixth example of the bonding portion of the optical element stacked member. As shown in Fig. 33A, the sixth example differs from the fourth example of the eighth embodiment with respect to a point that other optical elements are enclosed in enclosing spaces which are formed between the optical element 24 serving as a top surface and the incident surface and the transmission surface of the supporting medium 23.

(Seventh example)

Fig. 33B shows the seventh example of the bonding portion of the optical element stacked member. As shown in Fig. 33B, the seventh example differs from the fifth example of the eighth embodiment with respect to a point that other optical elements are enclosed in enclosing spaces which are formed between the optical element 24 serving as a top surface and the incident surface and the transmission surface of the supporting medium 23.

(Eighth example)

Fig. 33C shows the eighth example of the bonding portion of the optical element stacked member. As shown in Fig. 33C, the eighth example differs from the sixth example of the eighth embodiment with respect to a point that other optical elements are arranged in enclosing spaces which are formed between the optical element 24 serving as a top surface and the incident surface and the transmission surface of the supporting medium 23.

(10) Tenth embodiment

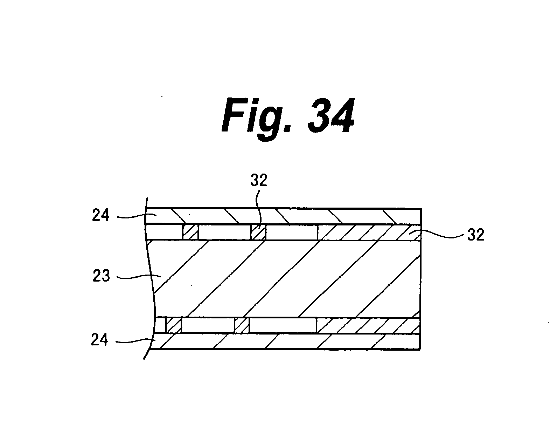

Fig. 34 shows a constructional example of an optical element stacked member according to the tenth embodiment of the invention. As shown in Fig. 34, the optical element stacked member 31 differs from the eighth embodiment with respect to a point that the supporting medium 23 and the optical element 24 besides the outer edges are also bonded. It is preferable that the bonding is a point bonding from a viewpoint of suppressing the deterioration in display properties. Specifically speaking, it is preferable that a width of bonding portion is less than 0.2 mm.

(11) Eleventh embodiment

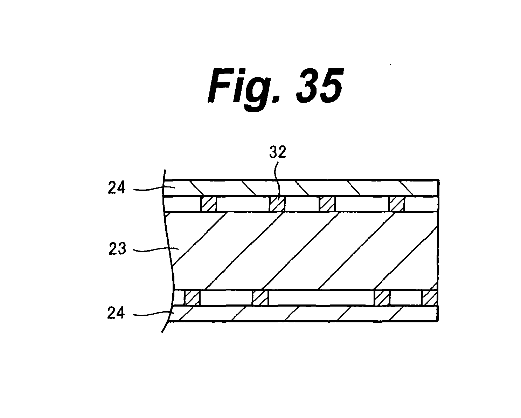

Fig. 35 shows a constructional example of an optical element stacked member according to the eleventh embodiment of the invention. As shown in Fig. 35, the optical element stacked member 31 differs from the eighth embodiment with respect to a point that the optical element 24 is point-bonded to the supporting medium 23 in at least the region other than the display region. The optical element 24 may be point-bonded to all of the regions of the incident surface and the transmission surface of the supporting medium 23. In this case, a point-bonding pattern may be any of a regular pattern and an irregular pattern. The number of point-bonding portions in the display region may be reduced as compared with that in a region out of the display region.

(12) Twelfth embodiment

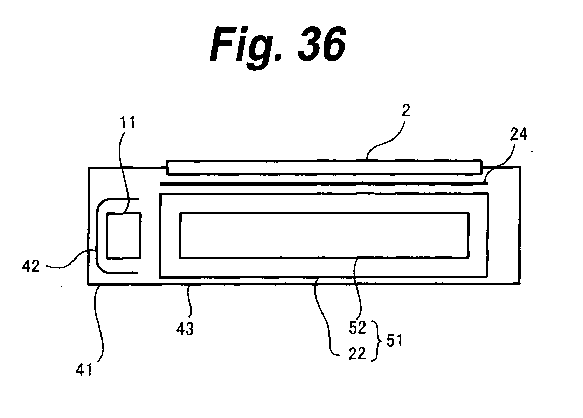

Fig. 36 shows a constructional example of a liquid crystal display apparatus according to the eleventh embodiment of the invention. As shown in Fig. 36, the liquid crystal display apparatus differs from that in the first embodiment with respect to a point that it has a backlight 41 of a side light system (also called an edge light system). One or a plurality of optical elements 24 may be further provided between an optical element covering member 51 and the liquid crystal panel 2 as necessary. Moreover, a reflector 42 which covers the light source 11 may be further provided as necessary.

[Backlight]

The backlight 41 is a backlight unit of what is called a side light system (also called an edge light system) and has: the optical element covering member 51; one or a plurality of light sources 11 provided at one end of the optical element covering member 51; and a casing 43 for enclosing the optical element covering member 51 and the one or a plurality of light sources 11.

[Optical element covering member]

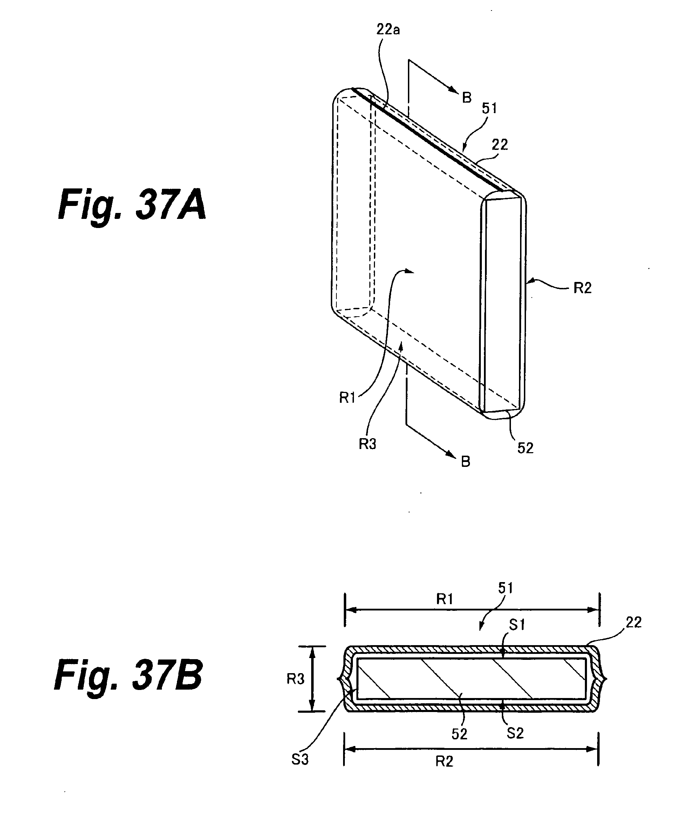

Fig. 37 shows a constructional example of the optical element covering member according to the first embodiment of the invention. As shown in Fig. 37, the optical element covering member 51 has, for example: a light guiding plate 52; and the covering member 22 which covers the light guiding plate 52. It is preferable that the light guiding plate 52 and the covering member 22 are closely adhered from a viewpoint of suppressing the deterioration in image.

The optical element covering member 51 has: the first principal surface which faces the liquid crystal panel 2; the second principal surface on the side opposite to the first principal surface; and edge surfaces locating between the first principal surface and the second principal surface. The light from the light source 11 enters from one end of the optical element covering member 51.

The light guiding plate 52 has, for example, a flat-plate shape or a tapered shape which gradually becomes thin from one end where the light source 11 is arranged toward the other end on the side opposite thereto. As a material of the light guiding plate 52, for example, a transparent plastic such as polymethyl methacrylate (PMMA), polycarbonate (PC), polystyrene (PS), cycloolefin resin (for example, ZEONOR, etc.), or the like can be used.

The light guiding plate 52 has a rectangular shape as a whole. That is, the light guiding plate 52 has: a first principal surface S1 which faces the liquid crystal panel 2; a second principal surface S2 on the side opposite to the first principal surface; and edge surfaces S3 locating between the first principal surface S1 and the second principal surface S2. The covering member 22 covers, for example, the first principal surface S1, the second principal surface S2, and a pair of facing edge surfaces S3. The light from the light source 11 enters, for example, from one of the pair of edge surfaces S3. On the other hand, besides a construction in which the light from the light source 11 enters from the direction of the edge surface S3, such a construction that the light source 11 is embedded into the light guiding plate 52 on the side of the second principal surface S2 and the light from the light source 11 is propagated may be used.

A dot pattern or an uneven structure for scattering and reflecting the light which entered the light guiding plate is formed on the second principal surface S2 or the first principal surface S1 of the light guiding plate 52. As a forming method of the dot pattern, for example, there can be used: a printing system for printing reflection dots by white ink; a molding system for forming concave/convex portions by a stamper or an ink jet; a sticky dot system for adhering the light guiding plate 52 and the covering member 22 by a dot-shaped pressure sensitive adhesive; or the like. On the other hand, as a forming method of the uneven structure, for example, there can be used: an injection molding method; a melt-extrusion molding method; a thermal transfer molding method; or a method whereby the sheet formed by those molding methods is bonded onto a rectangular substrate.

The covering member 22 has the contraction property or extension property in at least a part thereof and also has the optical function. The covering member 22 has: the first region R1 which covers the first principal surface S1 of the light guiding plate 52; the second region R2 which covers the second principal surface S2 of the light guiding plate 52; and a third region R3 which covers the edge surfaces S3 of the light guiding plate 52. The covering member 22 has the optical function in, for example, at least one of the first region, the second region, and the third region, preferably, in the first region and the second region, and much preferably, in all of the regions. As an optical function, for example, a light diffusing function, a light condensing function, a reflection-type polarizing function, a polarizer function, or a light dividing function can be mentioned. A plurality of optical functions may be allocated for each of the above regions. The covering member 22 has the inner surface which faces the light guiding plate 52 and the outer surface on the side opposite to the inner surface. An optical functional layer is formed on at least one of the inner surface and the outer surface.

As an optical function of the first region R1, for example, at least one kind of function such as light diffusing function, light condensing function, polarization reflecting function, and light converting function can be used. As an optical function of the second region R2, for example, at least one kind of function such as diffusing function, reflecting function, light source dividing function, or light converting function can be used. As an optical function of the third region R3 into which the light from the light source 11 enters, for example, at least one kind of function such as diffusing function or incident assisting function can be used. As an optical function of the third region R3 other than the third region R3 into which the light from the light source 11 enters, for example, at least one kind of function such as diffusing function or reflecting function can be used. Those optical functions can be obtained by transferring a shape such as lens shape, emboss shape, or the like to the substrate itself constructing the covering member 22 or by allowing the substrate itself to contain fine particles or voids. The optical functional layer may be formed onto the substrate constructing the covering member 22. Specifically speaking, a surface layer having a lens shape or an embossed shape may be formed onto the substrate or a surface layer containing the fine particles or voids may be formed onto the substrate.

In the 12th embodiment, constructions other than the foregoing construction are similar to those in the first embodiment.

(13) Thirteenth embodiment

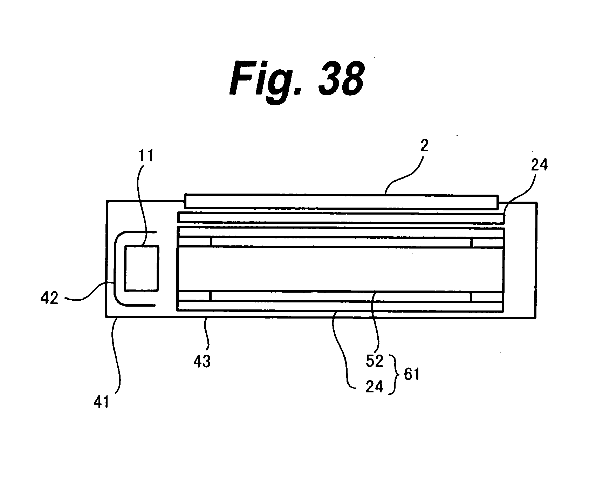

Fig. 38 shows a constructional example of a liquid crystal display apparatus according to the thirteenth embodiment of the invention. As shown in Fig. 38, the liquid crystal display apparatus differs from that in the 12th embodiment with respect to a point that it has an optical element stacked member 61 in place of the optical element covering member.

The optical element stacked member 61 is similar to that in each of the 7th to 11th embodiments with respect to points except that the light guiding plate 52 is used as a supporting medium.

(14) Fourteenth embodiment

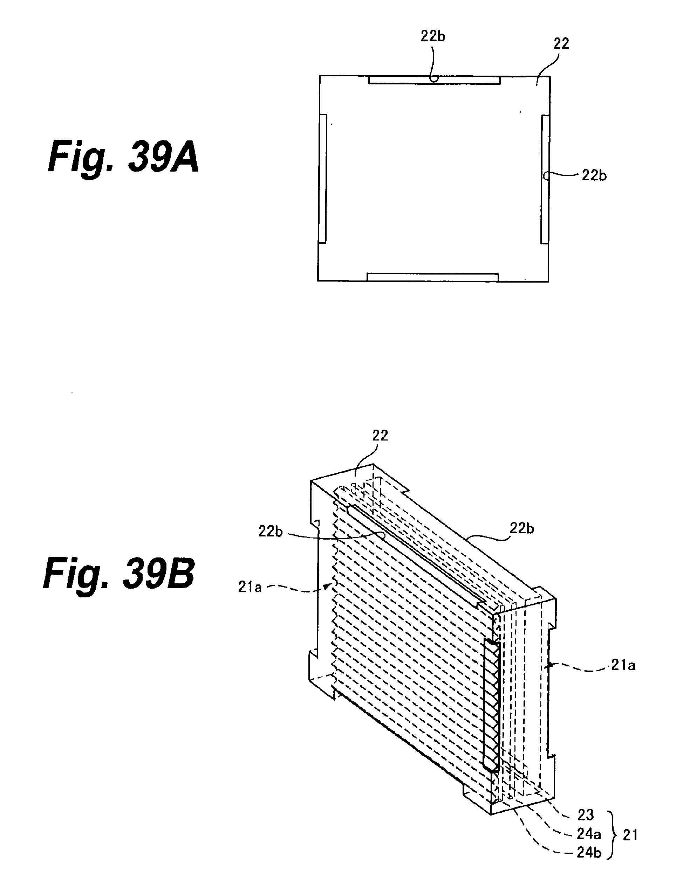

Fig. 39 shows a constructional example of an optical element covering member according to the fourteenth embodiment of the invention. The optical element covering member 2 differs from that in the first embodiment with respect to a point that the covering member 22 has opening portions 22b at the positions corresponding to side portions 21a of the optical element stacked member 21. As shown in Fig. 39, when the optical element stacked member 21 has a rectangular shape as a whole, it is preferable to form the opening portions 22b at the positions corresponding to the facing side portions 21a among the side portions 21a of the optical element stacked member 21. In Fig. 39, an example in which the opening portions 22b are formed at the positions corresponding to all of the side portions 21a of the optical element stacked member 21 is illustrated. It is preferable to select a size and a shape of the opening portion 22b in consideration of exhausting performance in the producing step of the optical element covering member 2, a shape of the optical element stacked member 21, durability of the covering member 22, and the like. For example, a slit shape as shown in Fig. 39 can be mentioned. However, it is not limited to such a shape and a shape such as circular shape, elliptical shape, semicircular shape, triangular shape, square shape, or rhombic shape may be used.

[Examples]

Although the invention will be specifically described with respect to Examples hereinbelow, the invention is not limited only to those Examples.

(Sample 1)

First, the following optical element and supporting medium are prepared. The optical element and supporting medium are used for a television having a size of 32 inches and have a size of 410 mm × 710 mm.

Reflection-type polarizer (DBEFD: manufactured by Sumitomo 3M Ltd. (thickness: 400 $\mu$m))
Lens sheet (Lens: hyperboloidal form shaped by PC melt extrusion: pitch, 200 $\mu$m, manufactured by Sony Corporation (thickness: 500 $\mu$m))
Diffuser sheet (BS-912: manufactured by KEIWA Inc. (205 $\mu$m))
Diffuser plate (Polycarbonate: manufactured by Teijin Chemicals Ltd. (thickness: 1500 $\mu$m))
Light control film (Unevenness removing film; hyperboloidal form shaped by PC melt extrusion: pitch, 200 $\mu$m, thickness, 200 $\mu$m))

Subsequently, the diffuser plate, diffuser sheet, lens sheet, and reflection-type polarizer are disposed onto the light control film in this order, thereby obtaining an optical element stacked member. Subsequently, an original roll of a polyethylene film having the heat contraction property is prepared and two sheets of rectangular films are cut out of the original roll. In this instance, an angle between the long side of the rectangular film and the aligning axis is set to 1°.

Subsequently, the two films are overlaid so that an angle between their aligning axes is set to 2° and three sides excluding one long side are thermally melt-bonded, thereby obtaining the sack-shaped covering member. Subsequently, the optical element stacked member is inserted from the open long side. Subsequently, the open long side is thermally melt-bonded and the covering member is sealed, thereby obtaining an optical element covering member. The thermal melt-bonding is executed by heating the outer edges of the covering member at 220 °C for 2 seconds. Subsequently, openings are formed at the positions corresponding to the corner portions of the covering member. Subsequently, the optical element covering member is conveyed into an oven and the covering member is contracted under an environment of a temperature of 105 °C. Thus, the optical element stacked member and the covering member are closely adhered and the corner portions of the optical element stacked member are exposed from the openings formed in the corner portions of the covering member.

In this manner, the target optical element covering member is obtained.

(Samples 2 to 7)

As shown in the following Table 1, optical element covering members are obtained in a manner similar to Sample 1 except that covering members made of films of polyolefin A (PP/PE system) and polyolefin B (PP/PE system) are used and a contraction margin of the covering member is set to values shown in Table 1.

(Samples 8 to 10)

As shown in the following Table 1, optical element covering members are obtained in a manner similar to Sample 1 except that covering members made of films of polyolefin (PE system) and polyolefin A (PP/PE system) are used and a size of diffuser plate is changed to a thickness of 0.002m, a long side of 0. 91m, and a short side of 0.52m.

(Samples 11 and 12)

As shown in the following Table 1, optical element covering members are obtained in a manner similar to Sample 1 except that covering members made of films of polyolefin A (PP/PE system) and polyolefin B (PP/PE system) are used and a size of diffuser plate is changed to a thickness of 0.002m, a long side of 1.03m, and a short side of 0.59m.

(Samples 13 to 16)

As shown in the following Table 1, optical element covering members are obtained in a manner similar to Sample 1 except that covering members made of films of polyolefin A (PP/PE system) and polyolefin B (PP/PE system) are used, opening portions are not formed in the corner portions of the covering member, and a shape of the corner portion of the supporting medium is set to the R1 shape.

(Measurement of temperature in actual TV apparatus)

A temperature on the optical element covering member on the light source side in the actual TV apparatus is measured by a thermocouple. Upon measurement, nine points in the plane are measured. Thus, the apparatus is turned on at an ordinary temperature of 25°C, its temperature rises to up to about 67°C and becomes constant. Even when the apparatus is turned on in an environment of 50°C, the temperature rises to up to about 70°C and becomes constant. At 50°C, such a specification that a safety guarantee of a circuit operates and the temperature does not exceed 70°C is set. The measurement of the tensile force and the like is progressed by the evaluation of the covering member at the time of 70°C.

(Measurement of tensile force of covering member)

The tensile force of the covering member is measured as follows by using TMA (Heat-stress-strain measuring instrument, EXSTAR6000 TMA/SS) manufactured by Seikosha Co., Ltd.).

First, in a state where the tensile force has been applied to the covering member, a test piece of 5 mm $\times$ 50 mm is cut out from a center portion of the optical element covering member by a rectangular die. In this instance, the test piece is cut out in such a manner that the long side and the short side of the test piece are parallel with the long side and the short side of the diffuser plate as a supporting medium, respectively. Subsequently, the test piece is sandwiched between glass plates and is set into a looseless state. After that, a length is measured by a tool microscope manufactured by Topcon Co., Ltd. Since the cut-out test piece is in a state where the tensile force has been released, the test piece is in a state where it is contracted by an amount more than 50 mm. The dimensions are calculated so as to return the test piece from the contraction state to the initial state of 50 mm and the test piece is cut again for the TMA and set. Subsequently, the tensile force at the time of the initial temperature of 25°C is measured. The temperature is raised to 100°C and the tensile force at the time of 70°C is measured. The temperature of 70°C is a temperature of the atmosphere near the test piece. Results are shown in Table 2 and Fig. 40.

In Fig. 40, a straight line F shows a straight line expressed by F = 1.65 × 10$^4$ × t/L. A displacement amount a indicates a displacement amount of t/L (where, t: thickness of side of the supporting medium, L: length of side of the supporting medium). A displacement amount b indicates a displacement amount of the tensile force F to the displacement amount a. A numerical value k indicates a ratio a/b, that is, an inclination of the straight line. On the other hand, a mark "■" indicates an actual measurement value F (tensile force) which does not satisfy the relations of the expressions (2) and (3) and a mark "♦" indicates an actual measurement value F (tensile force) which satisfies the relations of the expressions (2) and (3).

(Calculating method of tensile force of covering member)

The tensile force of Samples 1 to 16 are calculated as follows by using the expressions (2) and (3). Results are shown in Table 2.
Samples 1 to 7, Samples 13 to 16 (32 inches)

$$F1 = 1.65 \times 10^4 \times 0.0015/0.71 = 34.9$$

$$F2 = 1.65 \times 10^4 \times 0.0015/0.41 = 60.4$$

Samples 8 to 10 (40 inches)

$$F1 = 1.65 \times 10^4 \times 0.002/0.91 = 36.3$$

$$F2 = 1.65 \times 10^4 \times 0.002/0.52 = 63.5$$

Samples 11 and 12 (46 inches)

$$F1 = 1.65 \times 10^4 \times 0.002/1.03 = 32.0$$

$$F2 = 1.65 \times 10^4 \times 0.002/0.59 = 55.9$$

(Measurement of tensile force of covering member)

First, a test piece is extracted by the die of 5 × 50 mm so as to ride over the sealing portion of the optical element covering member and the test piece is cut again for the foregoing TMA and set. Subsequently, the tensile force of the test piece at the time of the initial ordinary temperature of 25°C is measured. After that, the temperature is raised to 70°C and the tensile force of the test piece at the time of 70°C is measured.

(Measurement of warp of covering member)

The produced Samples are put onto a base plate, return amounts of four corners are measured by an iron square, and a maximum warp amount is measured. Results are shown in Table 2.

(Evaluation of actual installation test)

As actual installation evaluation apparatuses, a liquid crystal television of 32 inches (manufactured by Sony Corporation, trademark: LCDTV-J3000), a liquid crystal television of 40 inches (manufactured by Sony Corporation, trademark: LCDTV-J3000), and a liquid crystal television of 46 inches (manufactured by Sony Corporation, trademark: LCDTV-V2500) are prepared. Subsequently, the diffuser plate, diffuser sheet, prism sheet, and reflection-type polarization sheet as optical elements of a backlight unit in the liquid crystal television are taken out, the optical element covering members of Samples 1 to 16 mentioned above are disposed again, and outside appearances of the panel display is evaluated by the following standards. Results are shown in Table 2.

5: There is no luminance variation even at a front surface and a squint of 60°
4: Front surface: there is no luminance variation/at a squint of 60°: there is a very small variation
3: Front surface: there is a very small luminance variation/at a squint of 60°: there is a small variation
2: Front surface: there is a small variation/at a squint of 60°: there is a variation
1: Luminance variation is confirmed even at a front surface and a squint of 60°

Properties at such a level that there are no practical problems are obtained at "3" or more.

(Evaluation of squeal)

The TV in which the optical element covering member has actually been installed is turned on and held for 2 hours under an environment of 25 °C, after that, it is turned off, and the presence or absence of the occurrence of a squeal generated for 1 hour is evaluated. Specifically speaking, a measuring environment is set to 25 dB or less and the apparatus in which the maximum noise is equal to 40 dB or more is evaluated as "there is a squeal", and the apparatus in which the maximum noise is less than 40 dB is evaluated as "there is a squeal". Upon measurement, NL-32 manufactured by RION Co., Ltd. is used. Results are shown in Table 2.

[TABLE 1]

| SAMPLE | MATERIAL | COVERING MEMBER | | | | | SUPPORTING MEDIUM | | SIZE OF SUPPORTING MEDIUM | |
|---|---|---|---|---|---|---|---|---|---|---|
| | | WHOLE FORM | CORNER PORTION OF SUPPORTING MEDIUM | THICKNESS ($\mu$m) | CONTRACTION MARGIN | | THICKNESS (m) | SHAPE OF CORNER PORTION | LONG SIDE (m) | SHORT SIDE (m) |
| | | | | | LONG SIDE (mm) | SHORT SIDE (mm) | | | | |
| SAMPLE 1 | POLYOLEFIN (PE SYSTEM) | 6-SURFACE SACK-SHAPE | C6 IS OPEN | 30 | 70 | 76 | 0.0015 | R6 | 0.71 | 0.41 |
| SAMPLE 2 | POLYOLEFIN A (PP/PE SYSTEM) | 6-SURFACE SACK-SHAPE | C6 IS OPEN | 30 | 40 | 23 | 0.0015 | R6 | 0.71 | 0.41 |
| SAMPLE 3 | POLYOLEFIN A (PP/PE SYSTEM) | 6-SURFACE SACK-SHAPE | C6 IS OPEN | 30 | 43 | 25 | 0.0015 | R6 | 0.71 | 0.41 |
| SAMPLE 4 | POLYOLEFIN A (PP/PE SYSTEM) | 6-SURFACE SACK-SHAPE | C6 IS OPEN | 30 | 38 | 9 | 0.0015 | R6 | 0.71 | 0.41 |
| SAMPLE 5 | POLYOLEFIN A (PP/PE SYSTEM) | 6-SURFACE SACK-SHAPE | C6 IS OPEN | 30 | 32 | 8 | 0.0015 | R6 | 0.71 | 0.41 |
| SAMPLE 8 | POLYOLEFIN A (PP/PE SYSTEM) | 6-SURFACE SACK-SHAPE | C6 IS OPEN | 30 | 32 | 5 | 0.0015 | R6 | 0.71 | 0.41 |

| SAMPLE | MATERIAL | COVERING MEMBER | | | | | SUPPORTING MEDIUM | | SIZE OF SUPPORTING MEDIUM | |
|---|---|---|---|---|---|---|---|---|---|---|
| | | WHOLE FORM | CORNER PORTION OF SUPPORTING MEDIUM | THICKNESS (μm) | CONTRACTION MARGIN | | THICKNESS (m) | SHAPE OF CORNER PORTION | LONG SIDE (m) | SHORT SIDE (m) |
| | | | | | LONG SIDE (mm) | SHORT SIDE (mm) | | | | |
| SAMPLE 7 | POLYOLEFIN A (PP/PE SYSTEM) | 6-SURFACE SACK-SHAPE | C6 IS OPEN | 50 | 67 | 33 | 0.0015 | R6 | 0.71 | 0.41 |
| SAMPLE 8 | POLYOLEFIN (PE SYSTEM) | 6-SURFACE SACK-SHAPE | C6 IS OPEN | 30 | 81 | 85 | 0.002 | R6 | 0.91 | 0.52 |
| SAMPLE 9 | POLYOLEFIN A (PP/PE SYSTEM) | 6-SURFACE SACK-SHAPE | C6 IS OPEN | 30 | 46 | 16 | 0.002 | R6 | 0.91 | 0.52 |
| SAMPLE 10 | POLYOLEFIN A (PP/PE SYSTEM) | 6-SURFACE SACK-SHAPE | C6 IS OPEN | 30 | 37 | 6 | 0.002 | R6 | 0.91 | 0.52 |
| SAMPLE 11 | POLYOLEFIN A (PP/PE SYSTEM) | 6-SURFACE SACK-SHAPE | C6 IS OPEN | 30 | 63 | 33 | 0.002 | R6 | 1.03 | 0.59 |
| SAMPLE 12 | POLYOLEFIN A (PP/PE SYSTEM) | 6-SURFACE SACK-SHAPE | C6 IS OPEN | 50 | 62 | 56 | 0.002 | R6 | 1.03 | 0.59 |

(continued)

| SAMPLE | MATERIAL | COVERING MEMBER | | | | | SUPPORTING MEDIUM | | SIZE OF SUPPORTING MEDIUM | |
|---|---|---|---|---|---|---|---|---|---|---|
| | | WHOLE FORM | CORNER PORTION OF SUPPORTING MEDIUM | THICKNESS (μm) | CONTRACTION MARGIN | | THICKNESS (m) | SHAPE OF CORNER PORTION | LONG SIDE (m) | SHORT SIDE (m) |
| | | | | | LONG SIDE (mm) | SHORT SIDE (mm) | | | | |
| SAMPLE 13 | POLYOLEFIN A (PP/PE SYSTEM) | 6-SURFACE SACK-SHAPE | C6 IS OPEN | 30 | 39 | 18 | 0.0015 | R1 | 0.71 | 0.41 |
| SAMPLE 14 | POLYOLEFIN A (PP/PE SYSTEM) | 6-SURFACE SACK-SHAPE | C6 IS OPEN | 30 | 32 | 5 | 0.0015 | R1 | 0.71 | 0.41 |
| SAMPLE 15 | POLYOLEFIN A (PP/PE SYSTEM) | 6-SURFACE SACK-SHAPE | NOT OPEN | 30 | 41 | 20 | 0.0015 | R1 | 0.71 | 0.41 |
| SAMPLE 16 | POLYOLEFIN A (PP/PE SYSTEM) | 6-SURFACE SACK-SHAPE | NOT OPEN | 30 | 31 | 8 | 0.0015 | R1 | 0.71 | 0.41 |

[TABLE 2]

| SAMPLE | WARP SUPPRESSION CALCULATION VALUE | | ACTUAL MEASUREMENT VALUE OF TENSILE FORCE AT 70°C | | WARP OF OPTICAL ELEMENT COVERING MEMBER | ACTUAL INSTALLATION OUTSIDE APPEARANCE OF LIQUID CRYSTAL DISPLAY APPARATUS | GENERATION OF SQUEAL (40dB OR MORE) |
|---|---|---|---|---|---|---|---|
| | LONG-SIDE DIRECTION (N/m) | SHORT-SIDE DIRECTION (N/m) | LONG-SIDE DIRECTION (N/m) | SHORT-SIDE DIRECTION (N/m) | WARP AMOUNT (mm) | | |
| SAMPLE 1 | 34.9 | 60.4 | 27.3 | 35.1 | 9 | 5 | NO |
| SAMPLE 2 | 34.9 | 60.4 | 32.2 | 40.3 | 11 | 5 | NO |
| SAMPLE 3 | 34.9 | 60.4 | 28.7 | 36.6 | 6 | 5 | NO |
| SAMPLE 4 | 34.9 | 60.4 | 34.4 | 60.1 | 16 | 4 | NO |
| SAMPLE 5 | 34.9 | 60.4 | 39.4 | 62.8 | 22 | 2 | NO |
| SAMPLE 6 | 34.9 | 60.4 | 39.4 | 66 | 24 | 2 | NO |
| SAMPLE 7 | 34.9 | 60.4 | 33.3 | 62.4 | 27 | 2 | YES |
| SAMPLE 8 | 36.3 | 63.5 | 28.5 | 40.8 | 13 | 5 | NO |
| SAMPLE 9 | 36.3 | 63.5 | 35.8 | 55 | 17 | 4 | NO |
| SAMPLE 10 | 36.3 | 63.5 | 43 | 66 | 27 | 2 | YES |
| SAMPLE 11 | 32.0 | 55.9 | 28.7 | 40.3 | 11 | 5 | NO |
| SAMPLE 12 | 32.0 | 55.9 | 38.9 | 58.3 | 24 | 2 | YES |
| SAMPLE 13 | 34.9 | 60.4 | 33 | 47.6 | 12 | 5 | NO |
| SAMPLE 14 | 34.9 | 60.4 | 39.4 | 66 | 21 | 2 | NO |
| SAMPLE 15 | 34.9 | 60.4 | 30.8 | 44 | 7 | 5 | NO |
| SAMPLE 16 | 34.9 | 60.4 | 40.8 | 62.3 | 23 | 2 | NO |

In Table 1, "Polyolefin A", "Polyolefin B", "C6 is open", and "Contraction margin" denote the following meanings.
Polyolefin A: Heat contractin fiilm having a thickness of 30 $\mu$m and having a multilayer structure consisting of polypropylene / (polyproylene + polyethylene) / polypropylene
Polyolfin B: Heat contraction film having a thickness of 50 $\mu$m and having a multilayer structure consisting of polypropyene / (polypropylene + polyethylene) / polypropylene
"C6 is open": Chamfer in which points away from the corner portions of the covering member every 6 mm are coupled
"Contraction margin": A difference between the sizes of the supporting medium and the covering member and it denotes a numerical value which does not contain the melt-bonding portion

The following points will be understood from Tables 1 and 2.

First, attention is paid to Samples 1 to 7 and 13 to 16 of the 32-inch size. When the surface tensile forces F1 and F2 of the covering member at a temperature of 70°C are set to F1 > 34.9 and F2 > 60.4, there is such a tendency that the warp increases and the picture quality deteriorates in the actual installation test evaluation.

Subsequently, attention is paid to Samples 8 to 10 of the 40-inch size. When the surface tensile forces F1 and F2 of the covering member at a temperature of 70°C are set to F1 > 36.3 and F2 > 63.5, the warp increases and there is such a tendency that the picture quality deteriorates in the actual installation test evaluation.

Subsequently, attention is paid to Samples 11 and 12 of the 46-inch size. When the surface tensile forces F1 and F2 of the covering member at a temperature of 70°C are set to F1 > 32.0 and F2 > 55.9, the warp increases and there is such a tendency that the picture quality deteriorates in the actual installation test evaluation.

Consequently, when the tensile forces at 70°C exceed the numerical values specified by the above expressions (2) and (3), the warp increases and there is such a tendency that the picture quality deteriorates in the TV actual installation test. On the other hand, when the size of TV is changed and the evaluation is performed, there is also such a tendency that when exceeding the numerical values, the warp is liable to occur and the TV picture quality deteriorates.

It will be presumed that in a state where the diffuser plate serving as a supporting medium is liable to be softened by the heat at the high temperature of 70°C, the tensile force of the covering member to the supporting medium exerts a stress action in the contracting direction and causes the warp.

(Sample 17)

Optical element covering members are obtained in a manner similar to Sample 1.

(Samples 18 to 20)

Optical element covering members are obtained in a manner similar to Sample 1 except that when the rectangular film is cut out of the original roll of the film, an angle between the long side of the rectangular film and the aligning axis is set to 3.5°, 8°, and 12°, respectively.

(Samples 21 to 24)

Optical element covering members are obtained in a manner similar to Sample 1 except that the film of polyolefin A is used as a film for producing the optical element covering members and when the rectangular film is cut out of the original roll of the film, an angle between the long side of the rectangular film and the aligning axis is set to 1.2°, 3°, 7°, and 10°, respectively.

(Measurement of aligning axis)

Aligning axes of the covering members of Samples 17 to 24 obtained as mentioned above are measured as follows. First, the covering member of a square shape of 100 mm x 100 mm is cut out in parallel with the supporting medium of the optical element covering member, thereby obtaining a test piece. Subsequently, in this test piece, an inclination angle of the aligning axis to the edge portion of the test piece is measured by a retardation measuring instrument manufactured by Otsuka Electronics Co., Ltd. Results are shown in Table 3.

(Evaluation of warp of optical element covering member)

The optical element covering members produced for the televisions of the 32-inch size (Samples 1 to 7 and 13 to 16), the 40-inch size (Samples 8 to 10), and the 46-inch size (Samples 11 and 12) are disposed onto the backlight which is used for the televisions manufactured by Sony Corporation. The backlight is lit on for one hour and, thereafter, warp amounts of the optical element covering members are measured by the iron square. The measured warp amounts are evaluated on the basis of the following three stages. Results are shown in Table 3.

3: The warp is less than 10 mm

2: The warp is small (from 10 mm or more to 20 mm or less)

1: The warp is equal to 20 mm or more.

Properties at such a level that there are no practical problems are obtained at "2" or more.

(Evaluation of outside appearance)

An outside appearance of the optical element covering member is evaluated in a manner similar to Sample 1 mentioned above. Results are shown in Table 3.

[TABLE 3]

| SAMPLE | MATERIAL | SEAUNG METHOD | TENSILE FORCE OF SEAUNG PORTION (N/m) | | | | TENSILE FORCE OF OPTICAL ELEMENT COVERING MEMBER (N/m) | | | | OUTSIDE APPEARANCE AT 70°C × 500H |
|---|---|---|---|---|---|---|---|---|---|---|---|
| | | | 25°C | | 70°C | | 25°C | | 70°C | | |
| | | | MD | TD | MD | TD | MD | TD | MD | TD | |
| SAMPLE 25 | POLYOLEFIN A (PP/PE SYSTEM) | HEATING AT 220°C × 2 SEC | 454 | 917 | 156 | 320 | 99 | 71.3 | 33.7 | 40.3 | THERE IS NO ABNORMALITY |
| SAMPLE 26 | POLYOLEFIN A (PP/PE SYSTEM) | HEATING AT 220°C × 1 SEC | 204 | 393 | 70 | 125 | | | | | THERE IS NO ABNORMALITY |
| SAMPLE 27 | POLYOLEFIN A (PP/PE SYSTEM) | HEATING AT 220°C × 0.5 SEC | 89 | 165 | 28 | 56 | | | | | BREAKAGE OF EDGE PORTION |

The following points will be understood from Table 3.

By setting the angles between the crystal axes in the first region and the second region of the covering member and the side surface of the supportin medium to a value within a range of 1° to 8°, the warp of the optical element covering member can be suppressed and the occurrence of looseness, variation, and wrinkles due to the covering member can be suppressed.

(Sample 25)

An optical element covering member is obtained in a manner similar to Sample 2.

(Sample 26)

An optical element covering member is obtained in a manner similar to Sample 25 except that the outer edge of the covering member is heated at 220 °C for 1 second and is thermally melt-bonded.

(Sample 27)

An optical element covering member is obtained in a manner similar to Sample 25 except that the outer edge of the covering member is heated at 220 °C for 0.5 second and is thermally melt-bonded.

(Measurement of tensile force of seal)

First, a test piece is extracted by a die of 5 x 50 mm so as to ride over the sealing portion of the optical element covering member. The test piece is cut again for the TMA mentioned above and set. Subsequently, a tensile force of the test piece at the time of the initial ordinary temperature of 25 °C is measured. After that, the temperature is raised to 70 °C and the tensile force of the test piece at the time of 70 °C is measured. Results are shown in Table 4.

(Evaluation of outside appearance when holding at high temperature)

The optical element covering member is held for 500 hours under an environment of 70 °C/Dry and a change in outside appearance is confirmed. Results are shown in Table 4.

[TABLE 4]

| SAMPLE | MATERIAL | DEVIATION AMOUNT OF CRYSTAL AXIS (ALIGNING AXIS) OF COVERING MEMBER TO CONTAINED MEMBER | WARP AMOUNT OF OPTICAL ELEMENT COVERING MEMBER (mm) | OUTSIDE APPEARANCE OF OPTICAL ELEMENT COVERING MEMBER | | ACTUAL INSTALLATION OUTSIDE APPEARANCE OF LIQUID CRYSTAL DISPLAY APPARATUS |
|---|---|---|---|---|---|---|
| | | | | (-) | | |
| SAMPLE 17 | POLYOLEFIN (PE SYSTEM) | 1 | 0.5 | 3 | GOOD | 5 |
| SAMPLE 18 | POLYOLEFIN (PE SYSTEM) | 3.5 | 1 | 3 | GOOD | 5 |
| SAMPLE 19 | POLYOLEFIN (PE SYSTEM) | 8 | 2 | 2 | THERE IS SMALL LOOSENESS IN CORNER PORTION | 4 |

(continued)

| SAMPLE | MATERIAL | DEVIATION AMOUNT OF CRYSTAL AXIS (ALIGNING AXIS) OF COVERING MEMBER TO CONTAINED MEMBER | WARP AMOUNT OF OPTICAL ELEMENT COVERING MEMBER (mm) | OUTSIDE APPEARANCE OF OPTICAL ELEMENT COVERING MEMBER | | ACTUAL INSTALLATION OUTSIDE APPEARANCE OF LIQUID CRYSTAL DISPLAY APPARATUS |
|---|---|---|---|---|---|---|
| | | | | (-) | | |
| SAMPLE 20 | POLYOLEFIN (PE SYSTEM) | 12 | 4 | 1 | THERE IS SLACK IN CORNER PORTION | 2 |
| SAMPLE 21 | POLYOLEFIN A (PP/PE SYSTEM) | 1.2 | 0.5 | 3 | GOOD | 5 |
| SAMPLE 22 | POLYOLEFIN A (PP/PE SYSTEM) | 3 | 1 | 3 | GOOD | 5 |
| SAMPLE 23 | POLYOLEFIN A (PP/PE SYSTEM) | 7 | 1 | 2 | THERE IS SMALL LOOSENESS IN CORNER PORTION | 4 |
| SAMPLE 24 | POLYOLEFIN A (PP/PE SYSTEM) | 10 | 2 | 1 | THERE IS SLACK IN CORNER PORTION | 2 |

The following points will be understood from Table 4.

When the tensile force F of the sealing portion is smaller than the tensile force F of the covering member, there is a risk that the sealing portion is exfoliated upon holding at a high temperature and the covering member is broken. It is, therefore, preferable to set the tensile force F of the sealing portion to be larger than the tensile force F of the covering member.

Although the embodiment of the invention has specifically been described above, the invention is not limited to the above embodiment but various modificatins based on the technical idea of the invention are possible.

For example, the numerical values mentioned in the above embodiment are nothing but the examples and other numerical values different from them may be used as necessary.

Each construction of the above embodiment can be mutually combined without departing from the spirit of the invention.

**Claims**

1. An optical element covering member comprising:

   one, two, or more film-shaped or sheet-shaped optical elements;
   a plate-shaped supporting medium for supporting said one, two, or more optical elements; and
   a contractible covering member for covering said one, two, or more optical elements and said supporting medium,
   **characterized in that** said one, two, or more optical elements and said supporting medium construct a stacked member,
   said stacked member has an incident surface into which light from a light source enters, a transmission surface for transmitting the light which has entered from said incident surface, and edge surfaces locating between said incident surface and said transmission surface,
said covering member is closely adhered to said stacked member and covers the transmission surface, the incident surface, and all of the edge surfaces of said stacked member, and
a thickness t of said supporting medium, a length L of a side of said supporting medium, and a tensile force F of said covering member satisfy the following relational expression (1) under an environment of a temperature of 70°C:

$$0 \leq F \leq 1.65 \times 10^{4} \times t/L \quad . . . (1)$$

(where, in the expression (1), t, L, and F indicate as follows,
t: distance between an incident surface and a transmission surface of the supporting medium,
L: length of a side closed by said covering member among the sides constructing a surface perpendicular to the thickness t, and
F: tensile force of the covering member which acts in a direction parallel with the side of the length L).

2. The optical element covering member according to claim 1, **characterized in that** the thickness t of said supporting medium, lengths L1 and L2 of sides which form the incident surface and the transmission surface of said supporting medium, and tensile forces F1 and F2 of the covering member which acts in the direction parallel with the sides of said lengths L1 and L2 satisfy the following relational expressions (2) and (3) under the environment of the temperature of 70°C:

$$0 \leq F1 \leq 1.65 \times 10^{4} \times t/L2 \quad . . . (2)$$

$$0 \leq F2 \leq 1.65 \times 10^{4} \times t/L1 \quad . . . (3)$$

3. The optical element covering member according to claim 1, **characterized in that** said covering member has a heat contraction property.

4. The optical element covering member according to claim 1, **characterized in that** said covering member has a contraction property due to an extension covering.

5. The optical element covering member according to claim 1, **characterized in that**
said covering member has a bonding portion in which edge portions of the covering member are bonded each other, and
a strength of said bonding portion is larger than said tensile force F.

6. The optical element covering member according to claim 1, **characterized in that**
said covering member has a first region and a second region which respectively cover the incident surface and the transmission surface of said supporting medium, and
angles between aligning axes of said first region and said second region and the side having said length L are equal to 8° or less.

7. The optical element covering member according to claim 1, **characterized in that**
said covering member has a first region and a second region which respectively cover the incident surface and the transmission surface of said supporting medium, and
an optical functional layer is provided for at least one of said first region and said second region.

8. The optical element covering member according to claim 1, **characterized in that** at least one opening portion is provided for said covering member.

9. The optical element covering member according to claim 8, **characterized in that** the opening portion of said covering member is provided for a corner/curvature portion of said supporting medium.

**10.** An optical element covering member comprising:

a plate-shaped supporting medium; and
a contractible covering member for covering said supporting medium,
**characterized in that** said supporting medium has an incident surface into which light from a light source enters, a transmission surface for transmitting the light which has entered from said incident surface, and edge surfaces locating between said incident surface and said transmission surface,
said covering member is closely adhered to said supporting medium and covers the transmission surface, the incident surface, and all of the edge surfaces of said supporting medium, and
a thickness t of said supporting medium, a length L of a side of said supporting medium, and a tensile force F of said covering member satisfy the following relational expression (1) under an environment of a temperature of 70°C:

$$0 \leq F \leq 1.65 \times 10^4 \times t/L \quad . \ . \ . \ (1)$$

(where, in the expression (1), t, L, and F indicate as follows, t: distance between an incident surface and a transmission surface of the supporting medium,
L: length of a side closed by said covering member among the sides constructing a surface perpendicular to the thickness t, and
F: tensile force of the covering member which acts in a direction parallel with the side of the length L).

**11.** The optical element covering member according to claim 10, **characterized in that** the thickness t of said supporting medium, lengths L1 and L2 of sides which form the incident surface and the transmission surface of said supporting medium, and tensile forces F1 and F2 of the covering member which acts in the direction parallel with the sides of said lengths L1 and L2 satisfy the following relational expressions (2) and (3) under the environment of the temperature of 70°C:

$$0 \leq F1 \leq 1.65 \times 10^4 \times t/L2 \quad . \ . \ . \ (2)$$

$$0 \leq F2 \leq 1.65 \times 10^4 \times t/L1 \quad . \ . \ . \ (3)$$

**12.** The optical element covering member according to claim 10, **characterized in that** said covering member has a heat contraction property.

**13.** The optical element covering member according to claim 10, **characterized in that** said covering member has a contraction property due to an extension covering.

**14.** The optical element covering member according to claim 10, **characterized in that**
said covering member has a bonding portion in which edge portions of the covering member are bonded each other, and
a strength of said bonding portion is larger than said tensile force F.

**15.** The optical element covering member according to claim 10, **characterized in that**
said covering member has a first region and a second region which respectively cover the incident surface and the transmission surface of said supporting medium, and
angles between aligning axes of said first region and said second region and an axis perpendicular to the side having said length L are equal to 8° or less.

**16.** The optical element covering member according to claim 10, **characterized in that**
said covering member has a first region and a second region which respectively cover the incident surface and the transmission surface of said supporting medium, and
an optical functional layer is provided for at least one of said first region and said second region.

**17.** The optical element covering member according to claim 10, **characterized in that** at least one opening portion is provided for said covering member.

18. The optical element covering member according to claim 10, **characterized in that** at least one optical element selected from a light diffuser element, a light condenser element, a reflection-type polarizer, a polarizer, and a light dividing element is contained in said covering member.

19. A backlight having the optical element covering member according to claims 1 to 9.

20. A liquid crystal display apparatus having the optical element covering member according to claims 1 to 9.

21. A backlight having the optical element covering member according to claims 10 to 18.

22. A liquid crystal display apparatus having the optical element covering member according to claims 10 to 18.

23. An optical element covering member comprising:

a plate-shaped supporting medium; and
a contractible covering member for covering said supporting medium,
**characterized in that** said supporting medium has a first principal surface, a second principal surface, and edge surfaces locating between said first principal surface and said second principal surface,
said covering member is closely adhered to said supporting medium and covers the first principal surface, the second principal surface, and all of the edge surfaces of said supporting medium, and
a thickness t of said supporting medium, a length L of a side of said supporting medium, and a tensile force F of said covering member satisfy the following relational expression (1) under an environment of a temperature of 70°C:

$$0 \leq F \leq 1.65 \times 10^4 \times t/L \quad . \ . \ . \ (1)$$

(where, in the expression (1), t, L, and F indicate as follows, t: distance between the first principal surface and the second principal surface of the supporting medium,
L: length of a side closed by said covering member among the sides constructing a surface perpendicular to the thickness t, and
F: tensile force of the covering member which acts in a direction parallel with the side of the length L).

24. An optical element stacked member comprising:

a plate-shaped supporting medium having a first principal surface and a second principal surface; and
a contractible or extensible optical element which is stacked onto at least one of the first principal surface and the second principal surface of said supporting medium and has a film-shape or a sheet-shape,
wherein an outer edge of said stacked optical element is bonded to at least two facing sides of said supporting medium and said optical element and said supporting medium are closely adhered to each other, and
a thickness t of said supporting medium, a length L of the side of said supporting medium, and a tensile force F of said optical element satisfy the following relational expression (1) under an environment of a temperature of 70°C:

$$0 \leq F \leq 1.65 \times 10^4 \times t/L \quad . \ . \ . \ (1)$$

(where, in the expression (1), t, L, and F indicate as follows, t: distance between the first principal surface and the second principal surface of the supporting medium,
L: length of the two facing sides to which the optical element has been bonded among the sides constructing a surface perpendicular to the thickness t, and
F: tensile force of the optical element which acts in a direction parallel with the side of the length L).

25. The optical element stacked member according to claim 24, wherein said supporting medium is a diffuser plate or a light guiding plate.

**26.** A producing method of an optical element stacked member, comprising the steps of:

bonding an outer edge of the optical element to at least two facing sides of a supporting medium; and
heat-processing the optical element bonded to said supporting medium, thereby contracting said optical element and closely adhering said supporting medium and said optical element,
wherein a thickness t of said supporting medium, a length L of the side of said supporting medium, and a tensile force F of said optical element satisfy the following relational expression (1) under an environment of a temperature of 70°C:

$$0 \leq F \leq 1.65 \times 10^4 \times t/L \quad \ldots \quad (1)$$

(where, in the expression (1), t, L, and F indicate as follows, t: distance between the first principal surface and the second principal surface of the supporting medium,
L: length of the two facing sides to which the optical element has been bonded among the sides constructing a surface perpendicular to the thickness t, and
F: tensile force of the optical element which acts in a direction parallel with the side of the length L).

**27.** An optical element covering member comprising:

a plate-shaped optical element stacked member having a first principal surface, a second principal surface, and edge surfaces locating between said first principal surface and said second principal surface;
a contractible or extensible covering member for covering said optical element stacked member; and
a bonding member for bonding edge portions of the covering member which covers said first principal surface and edge portions of the covering member which covers said second principal surface,
wherein said optical element stacked member has
a plate-shaped supporting medium and
an optical element which is stacked onto said plate-shaped supporting medium and has a film-shape or a sheet-shape,
said bonding member is arranged at an outer edge of said optical element stacked member,
the covering member whose edge portions have been bonded by said bonding member covers the first principal surface, the second principal surface, and one set of facing edge surfaces of said optical element stacked member and is closely adhered to said optical element stacked member, and
a thickness t of said supporting medium, a length L of the side of said supporting medium, and a tensile force F of said covering member satisfy the following relational expression (1) under an environment of a temperature of 70°C:

$$0 \leq F \leq 1.65 \times 10^4 \times t/L \quad \ldots \quad (1)$$

(where, in the expression (1), t, L, and F indicate as follows,
t: distance between an incident surface and a transmission surface of the supporting medium,
L: length of the sides closed by said covering member and/or the bonding member among the sides constructing a surface perpendicular to the thickness t, and
F: tensile force of the covering member which acts in a direction parallel with the side of the length L).

**28.** An optical element covering member comprising:

a plate-shaped supporting medium having a first principal surface, a second principal surface, and edge surfaces locating between said first principal surface and said second principal surface;
a contractible or extensible covering member for covering said supporting medium; and
a bonding member for bonding edge portions of said covering member which covers said first principal surface and edge portions of the covering member which covers said second principal surface,
wherein said bonding member is arranged at an outer edge of said optical element stacked member,
the covering member whose edge portions have been bonded by said bonding member covers the first principal surface, the second principal surface, and one set of facing edge surfaces of said supporting medium and is closely adhered to said supporting medium, and

a thickness t of said supporting medium, a length L of the side of said supporting medium, and a tensile force F of said covering member satisfy the following relational expression (1) under an environment of a temperature of 70°C:

$$0 \leq F \leq 1.65 \times 10^{4} \times t/L \quad \ldots \quad (1)$$

(where, in the expression (1), t, L, and F indicate as follows,

t: distance between an incident surface and a transmission surface of the supporting medium,

L: length of the sides closed by said covering member and/or the bonding member among the sides constructing a surface perpendicular to the thickness t, and

F: tensile force of the covering member which acts in a direction parallel with the side of the length L).

# Fig. 1

# Fig. 2

# Fig. 3

*Fig. 4A*

*Fig. 4B*

# Fig. 5

~22

24d
23a
24a
24b
24c

# Fig. 6

# *Fig. 7*

# Fig. 8A

# Fig. 8B

# Fig. 9

# Fig. 10

# Fig. 11

# *Fig. 12*

## Fig. 13

22

24c  24b  24a  23a  24d

## Fig. 14A

22

24c
24b
24a

21

23a
24d

27

22

## Fig. 14B

22

24c
24b
24a

21

23a
24d

27

22

## Fig. 14C

22

24c
24b
24a

21

23a
24d

27

22

Fig. 15A

Fig. 15B

Fig. 15C

# Fig. 16A

# Fig. 16B

# Fig. 17

## Fig. 18A

## Fig. 18B

## Fig. 18C

## Fig. 18D

Fig. 19A

Fig. 19B

Fig. 19C

Fig. 19D

# Fig. 20

# Fig. 21

**Fig. 22A**

**Fig. 22B**

**Fig. 23A**

**Fig. 23B**

**Fig. 24A**

24

23

32

**Fig. 24B**

F2

24

23

F1

32

*Fig. 25A*

*Fig. 25B*

*Fig. 25C*

*Fig. 25D*

Fig. 26A

24

23

24

Fig. 26B

31

24

23

24

32

32

**Fig. 27A**

**Fig. 27B**

*Fig. 28A*

*Fig. 28B*

*Fig. 28C*

## Fig. 29A

## Fig. 29B

## Fig. 29C

**Fig. 30A**

**Fig. 30B**

*Fig. 31A*

*Fig. 31B*

*Fig. 32A*

*Fig. 32B*

*Fig. 32C*

Fig. 33A

Fig. 33B

Fig. 33C

# Fig. 34

# Fig. 35

# Fig. 36

Fig. 37A

Fig. 37B

# Fig. 38

*Fig. 39A*

*Fig. 39B*

# Fig. 40

DESCRIPTION OF REFERENCE NUMERALS

| | |
|---|---|
| 1 | LIGHTING DEVICE |
| 2 | OPTICAL ELEMENT COVERING MEMBER |
| 3 | BACKLIGHT |
| 4 | LIQUID CRYSTAL PANEL |
| 11 | LIGHT SOURCE |
| 12 | REFLECTOR |
| 21 | OPTICAL ELEMENT STACKED MEMBER |
| 22 | COVERING MEMBER |
| 22a | BONDING PORTION |
| 22b | OPENING PORTION |
| 22c | OPTICAL ELEMENT FUNCTIONAL LAYER |
| 23 | SUPPORTING MEDIUM |
| 23a | DIFFUSER PLATE |
| 24 | OPTICAL ELEMENT |
| 24a | DIFFUSER FILM |
| 24b | LENS FILM |
| 24c | REFLECTION-TYPE POLARIZER |
| 24d | LIGHT CONTROL FILM |
| 25 | BONDING MEMBER |
| 26 | STRUCTURE |
| 27 | BONDING PORTION |
| 31 | OPTICAL ELEMENT STACKED MEMBER |
| 32 | BONDING PORTION |
| R1 | FIRST REGION |
| R2 | SECOND REGION |

**INTERNATIONAL SEARCH REPORT**

| International application No. |
|---|
| PCT/JP2008/067599 |

A. CLASSIFICATION OF SUBJECT MATTER
*G02F1/1335(2006.01)i, G02F1/13357(2006.01)i*

According to International Patent Classification (IPC) or to both national classification and IPC

B. FIELDS SEARCHED

Minimum documentation searched (classification system followed by classification symbols)
G02F1/1335, G02F1/13357

Documentation searched other than minimum documentation to the extent that such documents are included in the fields searched

| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A<br>X | JP 2005-347272 A (NEC LCD Technologies, Ltd.),<br>15 December, 2005 (15.12.05),<br>Par. Nos. [0008] to [0028]; Figs. 1 to 3<br>& JP 2001-338508 A      & US 2001/0030859 A1<br>& EP 1136752 A1         & TW 528840 B<br>& KR 10-2001-0090521 A  & SG 94789 A | 1-23,27-28<br>24-26 |
| A<br>X | JP 2007-33524 A (Sharp Corp.),<br>08 February, 2007 (08.02.07),<br>Par. Nos. [0016] to [0017]; Fig. 1<br>(Family: none) | 1-23,27-28<br>24-26 |
| A<br>X | JP 2005-301147 A (Sharp Corp.),<br>27 October, 2005 (27.10.05),<br>Par. Nos. [0007] to [0038]; Figs. 1 to 3<br>(Family: none) | 1-23,27-28<br>24-26 |

| ☐ Further documents are listed in the continuation of Box C. | ☐ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>21 October, 2008 (21.10.08) | Date of mailing of the international search report<br>04 November, 2008 (04.11.08) |
|---|---|
| Name and mailing address of the ISA/<br>Japanese Patent Office | Authorized officer |
| Facsimile No. | Telephone No. |

Form PCT/ISA/210 (second sheet) (April 2007)

## INTERNATIONAL SEARCH REPORT

International application No.

PCT/JP2008/067599

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
"The special technical feature" of the inventions of claims 1-23 and claims 27-28 relates to "a wrapping member". "The special technical feature" of the inventions of claims 24-26 relates to "a support". Since there is no technical relationship among these inventions involving one or more of the same or corresponding special technical features, these inventions are not so linked as to form a single general inventive concept.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
the
☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

**EP 2 189 838 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005301147 A